# EUROPEAN PATENT APPLICATION

(11) **EP 4 851 695 A1**
(43) Date of publication of application: **09.12.2026**
(21) Application number: 25782342.7
(22) Date of filing: 31.01.2025
(51) Int. Cl.: G02B 21/34

(54) **SLIDE HOLDING UNIT AND IMAGE ACQUISITION DEVICE**

(30) Priority: 01.04.2024 JP 2024058890
(71) Applicant: Hamamatsu Photonics K.K., Hamamatsu-shi, Shizuoka 435-8558 (JP)
(72) Inventor: NAKAMURA, Akihiro, Hamamatsu-shi, Shizuoka 435-8558 (JP)
(74) Representative: Hoffmann Eitle
(86) International application number: PCT/JP2025/003249
(87) International publication number: WO 2025/211004

(57) **Abstract**

A slide holding unit is a slide holding unit for holding a rectangular plate-shaped slide having a pair of side portions, the slide holding unit including a first movable portion having a first arm extending along a first direction, a second movable portion having a second arm extending along the first direction and facing the first arm in a second direction perpendicular to the first direction, and a drive portion that moves the first movable portion and the second movable portion, wherein the drive portion moves both the first movable portion and the second movable portion in the second direction, whereby the first arm and the second arm hold the slide at the pair of side portions.

## Description

### Technical Field

One aspect of the present disclosure relates to a slide holding unit and an image acquisition apparatus.

### Background Art

For example, Patent Literature 1 describes an image acquisition apparatus that images a specimen placed on a slide and acquires an image. In the apparatus, a slide stored in a slide storage portion is held and taken out by a slide transport portion (slide holding unit), and is transported to a slide imaging portion. The slide imaging portion images the specimen placed on the slide and acquires an image. The slide transport portion has a pair of holding members, and the slide is held by movement of one of the holding members.

### Citation List

### Patent Literature

[Patent Literature 1] Japanese Unexamined Patent Publication No. 2017-015978

### Summary of Invention

### Technical Problem

In a configuration as described above, for example, when a slide is not stored straight in a slide storage portion (cassette) or when the cassette is placed in a tilted manner, there is a risk that the slide holding unit may hold the slide in a tilted posture, and there is a possibility that the slide cannot be transported satisfactorily.

An object of one aspect of the present disclosure is to provide a slide holding unit and an image acquisition apparatus capable of reliably holding a slide.

### Solution to Problem

A slide holding unit according to one aspect of the present disclosure is [1] "a slide holding unit for holding a rectangular plate-shaped slide including a pair of side portions, the slide holding unit comprising: a first movable portion including a first arm extending along a first direction; a second movable portion including a second arm extending along the first direction and facing the first arm in a second direction perpendicular to the first direction; and a drive portion that moves the first movable portion and the second movable portion, wherein the drive portion moves both the first movable portion and the second movable portion in the second direction, whereby the first arm and the second arm hold the slide at the pair of side portions."

In the slide holding unit, both the first movable portion including the first arm extending along the first direction and the second movable portion including the second arm extending along the first direction move in the second direction, whereby the first arm and the second arm hold the slide at the pair of side portions. Accordingly, for example, even when the slide is not stored straight in the cassette or when the cassette is placed in a tilted manner, the posture of the slide is easily adjusted when the slide is held by the first arm and the second arm, and as a result, the slide can be reliably held by the first arm and the second arm.

The slide holding unit according to one aspect of the present disclosure may be [2] "the slide holding unit according to [1], wherein the drive portion moves the first movable portion and the second movable portion in the second direction such that the first arm and the second arm move symmetrically with respect to a symmetry axis parallel to the first direction." In this case, the slide can be held more reliably by the first arm and the second arm.

The slide holding unit according to one aspect of the present disclosure may be [3] "the slide holding unit according to [1] or [2], wherein the drive portion includes a motor and a cam portion rotated by the motor, and the first movable portion and in accordance with a rotation angle of the cam portion, the second movable portion move in the second direction." In this case, the first movable portion and the second movable portion can be moved in the second direction using the motor and the cam portion.

The slide holding unit according to one aspect of the present disclosure may be [4] "the slide holding unit according to [3], wherein the cam portion has a shape in which a dimension in a major axis direction is larger than a dimension in a minor axis direction, by causing the first movable portion and the second movable portion to face each other in the major axis direction, a distance between the first arm and the second arm in the second direction is set to a first distance, and by causing the first movable portion and the second movable portion to face each other in the minor axis direction, the distance between the first arm and the second arm is set to a second distance, and the first distance is larger than a width of the slide between the pair of side portions, and the second distance is equal to or less than the width of the slide." In this case, by changing the rotation angle of the cam portion to change, between the first distance and the second distance, the distance between the first arm and the second arm, it is possible to switch between a state in which the slide is not held by the first arm and the second arm and a state in which the slide can be held by the first arm and the second arm.

The slide holding unit according to one aspect of the present disclosure may be [5] "the slide holding unit according to any one of [1] to [4], further comprising: a first biasing member that biases the first movable portion such that the first arm approaches the second arm; and a second biasing member that biases the second movable portion such that the second arm approaches the first arm." In this case, for example, even when power is suddenly no longer supplied to the slide holding unit, it is possible to prevent the holding of the slide by the first arm and the second arm from being released and the slide from falling.

The slide holding unit according to one aspect of the present disclosure may be [6] "the slide holding unit according to [5], wherein the first biasing member and the second biasing member are disposed at positions different from each other when viewed from the second direction." In this case, the slide holding unit can be reduced in size.

The slide holding unit according to one aspect of the present disclosure may be [7] "the slide holding unit according to any one of [1] to [6], further comprising: a first sensor that is turned on and off in accordance with a position of the first movable portion in the second direction; and a second sensor that is turned on and off in accordance with a position of the second movable portion in the second direction, wherein the first sensor and the second sensor are disposed such that a first state, a second state, and a third state are distinguishable by a combination of on and off states of the first sensor and the second sensor, a distance between the first arm and the second arm in the second direction in the first state is larger than a width of the slide between the pair of side portions, the distance between the first arm and the second arm in the second state is equal to the width of the slide, and the distance between the first arm and the second arm in the third state is smaller than the width of the slide." In this case, the distance between the first arm and the second arm can be ascertained based on the on/off states of the first sensor and the second sensor.

The slide holding unit according to one aspect of the present disclosure may be [8] "the slide holding unit according to any one of [1] to [7], wherein a groove portion extending along the first direction is formed in at least one of a contact surface of the first arm with the slide and a contact surface of the second arm with the slide." In this case, the slide can be held more reliably by the first arm and the second arm.

The slide holding unit according to one aspect of the present disclosure may be [9] "the slide holding unit according to [8], wherein the groove portion is formed in both the contact surface of the first arm with the slide and the contact surface of the second arm with the slide." In this case, the slide can be held more reliably by the first arm and the second arm.

The slide holding unit according to one aspect of the present disclosure may be [10] "the slide holding unit according to any one of [1] to [9], wherein the first arm includes a protruding portion that is formed on a proximal end side relative to the contact surface with the slide and that protrudes toward the second arm side relative to the contact surface." In this case, when storing the slide in the cassette, the end portion of the slide can be pushed in by the protruding portion, and the slide can be reliably stored in the cassette (slide storage portion).

The slide holding unit according to one aspect of the present disclosure may be [11] "the slide holding unit according to any one of [1] to [10], wherein each of a length of a contact portion of the first arm with the slide along the first direction and a length of a contact portion of the second arm with the slide along the first direction is 16.5 mm or less." In this case, the slide stored in the cassette can be reliably held.

The slide holding unit according to one aspect of the present disclosure may be [12] "the slide holding unit according to any one of [1] to [11], further comprising a support member that is provided so as to be positioned between the first arm and the second arm when viewed from a direction perpendicular to the first direction and the second direction, and that supports a main surface of the slide between the pair of side portions when the first arm and the second arm hold the slide at the pair of side portions." In this case, the slide can be stably held.

The slide holding unit according to one aspect of the present disclosure may be [13] "the slide holding unit according to [12], wherein a contact surface of the first arm with the slide is inclined so as to be farther from the second arm toward the support member, and a contact surface of the second arm with the slide is inclined so as to be farther from the first arm toward the support member." In this case, the slide can be held more stably.

An image acquisition apparatus according to one aspect of the present disclosure may be [14] "an image acquisition apparatus that acquires an image of a specimen held on a slide, the image acquisition apparatus comprising: the slide holding unit according to any one of [1] to [13]; and a stage on which the slide transported by the slide holding unit is placed, wherein the stage includes a pair of wall portions disposed so as to extend along the pair of side portions when the slide is placed on the stage, and when the slide is disposed between the pair of wall portions, movement of the slide in the second direction is restricted by the pair of wall portions."

In the image acquisition apparatus, the stage includes a pair of wall portions disposed so as to extend along the pair of side portions of the slide when the slide is placed on the stage. Accordingly, the slide can be placed on the stage while being guided by the pair of wall portions. In addition, in the image acquisition apparatus, when the slide is disposed between the pair of wall portions, movement of the slide in the second direction is restricted by the pair of wall portions. Accordingly, for example, even when the slide adheres to the first arm or the second arm due to a label protruding from the slide in the second direction, it is possible to prevent the slide from moving in the second direction together with the first arm or the second arm.

The slide holding unit according to one aspect of the present disclosure is [15] "a slide holding unit for holding a rectangular plate-shaped slide including a pair of main surfaces, the slide holding unit comprising: a first movable portion including a first arm extending along a first direction; a second movable portion including a second arm extending along the first direction and facing the first arm in a second direction perpendicular to the first direction; and a drive portion that moves the first movable portion and the second movable portion, wherein the drive portion moves both the first movable portion and the second movable portion in the second direction, whereby the first arm and the second arm hold the slide at the pair of main surfaces." In the slide holding unit, since the slide is held at the main surfaces by the first arm and the second arm, the slide can be stably held.

The slide holding unit according to one aspect of the present disclosure may be [16] "the slide holding unit according to the main claim described in [15], further comprising a pair of rotation-preventing arms provided on at least one of the first movable portion and the second movable portion, wherein the pair of rotation-preventing arms are configured to extend along a pair of side portions of the slide extending along the first direction when the slide is held at the pair of main surfaces by the first arm and the second arm, and when the slide is held at the pair of main surfaces by the first arm and the second arm, rotation of the slide around an axis parallel to the second direction is restricted by the pair of rotation-preventing arms." In this case, the slide can be held more stably.

### Advantageous Effects of Invention

According to one aspect of the present disclosure, it is possible to provide a slide holding unit and an image acquisition apparatus capable of reliably holding a slide.

### Brief Description of Drawings

[FIG. 1] FIG. 1 is a configuration diagram of an image acquisition apparatus according to an embodiment.
[FIG. 2] FIG. 2 is a perspective view showing the cassette of FIG. 1.
[FIG. 3] FIG. 3 is an enlarged view showing the cassette of FIG. 1.
[FIG. 4] FIG. 4 is a perspective view showing a part of the stage of FIG. 1.
[FIG. 5] FIG. 5 is a perspective view showing the slide holding unit according to the embodiment.
[FIG. 6] (a), (b), (c), and (d) in FIG. 6 are diagrams for describing an operation in which the slide holding unit places a slide on the stage.
[FIG. 7] FIG. 7 is a perspective view for describing the configuration of the slide holding unit.
[FIG. 8] FIG. 8 is a perspective view for describing the configuration of the slide holding unit.
[FIG. 9] FIG. 9 is a perspective view for describing the configuration of the slide holding unit.
[FIG. 10] FIG. 10 is a perspective view for describing the configuration of the slide holding unit.
[FIG. 11] FIG. 11 is a perspective view showing the slide holding unit.
[FIG. 12] FIG. 12 is an enlarged view of the linear motion guide and the first body portion of FIG. 11.
[FIG. 13] (a), (b), (c), and (d) in FIG. 13 are cross-sectional views of the first arm and the second arm of FIG. 11 taken along line XIII-XIII.
[FIG. 14] (a) in FIG. 14 is a front view showing the slide holding unit, and (b) in FIG. 14 is a perspective view of the slide holding unit.
[FIG. 15] (a), (b), and (c) in FIG. 15 are diagrams for describing the on/off states of the first sensor and the second sensor in accordance with the positions of the first movable portion and the second movable portion.
[FIG. 16] (a), (b), and (c) in FIG. 16 are diagrams for describing the movement of the first arm and the second arm.
[FIG. 17] (a), (b), and (c) in FIG. 17 are diagrams for describing the movement of the first arm and the second arm.
[FIG. 18] (a), (b), and (c) in FIG. 18 are diagrams for describing the operation of a slide holding unit according to a comparative example.
[FIG. 19] (a), (b), and (c) in FIG. 19 are diagrams for describing the operation of the image acquisition apparatus according to the embodiment.
[FIG. 20] (a), (b), and (c) in FIG. 20 are diagrams for describing the operation of the image acquisition apparatus according to the embodiment.
[FIG. 21] FIG. 21 is a perspective view showing a slide holding unit according to a first modification example.
[FIG. 22] (a) and (b) in FIG. 22 are perspective views showing a slide holding unit according to a second modification example.
[FIG. 23] (a) and (b) in FIG. 23 are front views of the slide holding unit according to the second modification example.
[FIG. 24] FIG. 24 is a perspective view showing a slide holding unit according to a third modification example.
[FIG. 25] (a) and (b) in FIG. 25 are side views showing the slide holding unit according to the third modification example.

### Description of Embodiments

Hereinafter, an embodiment of one aspect of the present disclosure will be described in detail with reference to the drawings. In the following description, the same reference signs are used for the same or corresponding elements, and duplicate descriptions will be omitted.

### [Configuration of Image Acquisition Apparatus]

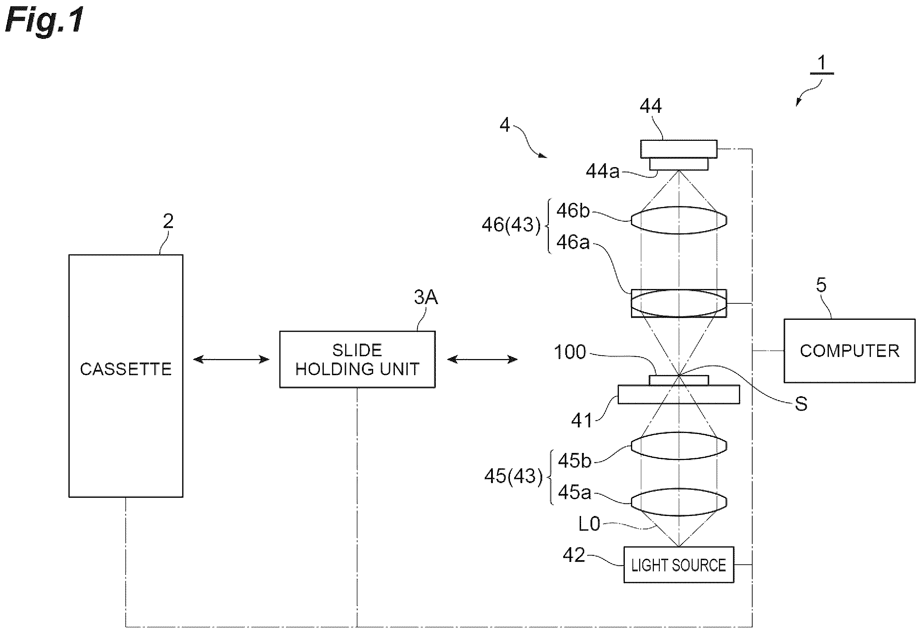

FIG. 1 is a configuration diagram of the image acquisition apparatus according to the embodiment. As shown in the figure, an image acquisition apparatus 1 includes a cassette 2 (slide storage portion or basket), a slide holding unit 3A, an imaging unit 4, and a computer 5. In the image acquisition apparatus 1, a slide 100 (slide glass or preparation) stored in the cassette 2 is held by the slide holding unit 3A and transported to the imaging unit 4. The imaging unit 4 acquires an image of a specimen S held on the slide 100. The specimen S is, for example, a biological sample such as tissue cells. The computer 5 controls each of the cassette 2, the slide holding unit 3A, and the imaging unit 4, and executes transport processing of the slide 100 and imaging processing of the specimen S.

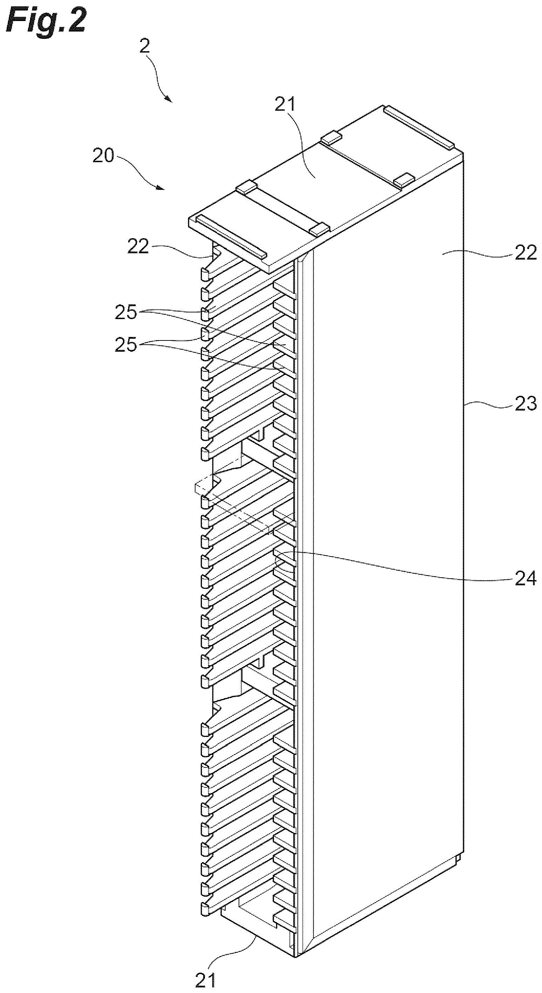

FIG. 2 is a perspective view showing the cassette 2. The cassette 2 includes a resin housing 20 having a vertically elongated substantially rectangular parallelepiped shape. The housing 20 has a pair of wall portions 21, a pair of first side wall portions 22, a second side wall portion 23, and an opening 24. The pair of wall portions 21 face each other in the height direction of the cassette 2. The pair of wall portions 21 extend perpendicularly to the height direction of the cassette 2. The pair of first side wall portions 22 face each other in the width direction of the cassette 2. The pair of first side wall portions 22 extend perpendicularly to the width direction of the cassette 2. The second side wall portion 23 faces the opening 24 in the longitudinal direction of the cassette 2. The second side wall portion 23 extends perpendicularly to the longitudinal direction of the cassette 2.

Holding plates 25, 25 that protrude toward the inside of the housing 20 are provided on the inner surfaces of the pair of first side wall portions 22, respectively. By placing the slide 100 on the holding plates 25, 25, the slide 100 is held in a state parallel to the pair of wall portions 21 of the housing 20. That is, a plurality of storage spaces each storing the slide 100 are formed by the pair of first side wall portions 22, the second side wall portion 23, and the holding plates 25, 25 in multiple tiers. In the cassette 2 of the present embodiment, 30 tiers of holding plates 25, 25 are provided in the height direction of the cassette 2 (Z direction described later), and it is possible to hold 30 slides 100 at one time.

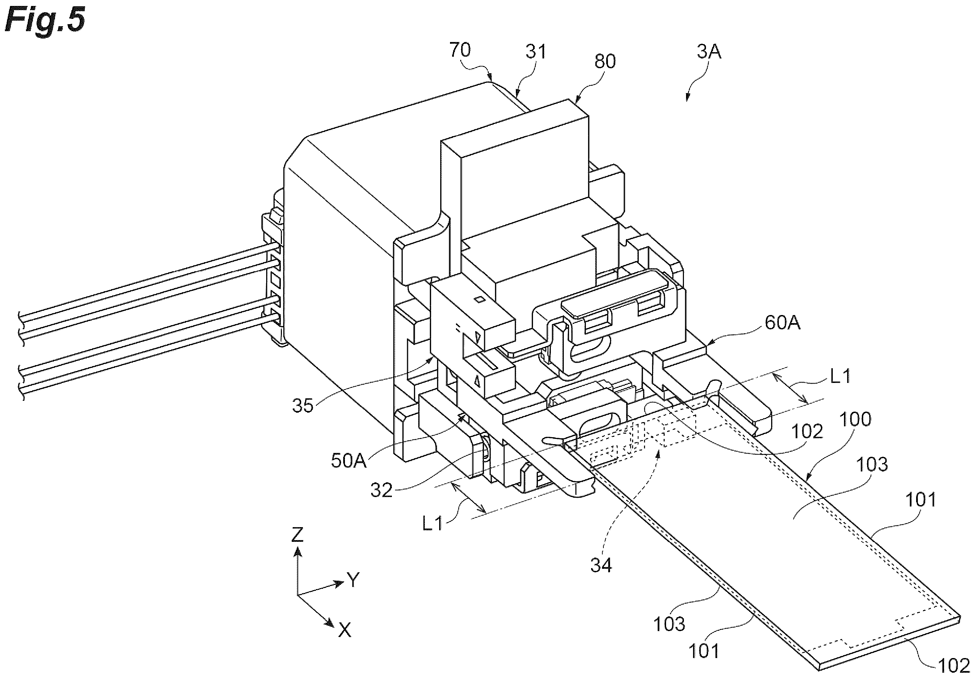

The slide 100 has a rectangular plate shape having a pair of long side portions 101 (pair of side portions), a pair of short side portions 102, and a pair of main surfaces 103 (see FIG. 5). For example, the slide 100 has a rectangular plate shape. The pair of long side portions 101 are a pair of long sides of the slide 100. The pair of short side portions 102 are a pair of short sides of the slide 100. The pair of main surfaces 103 are surrounded by the pair of long side portions 101 and the pair of short side portions 102. For example, the slide 100 is a slide glass in which the specimen S is held on one of the main surfaces 103.

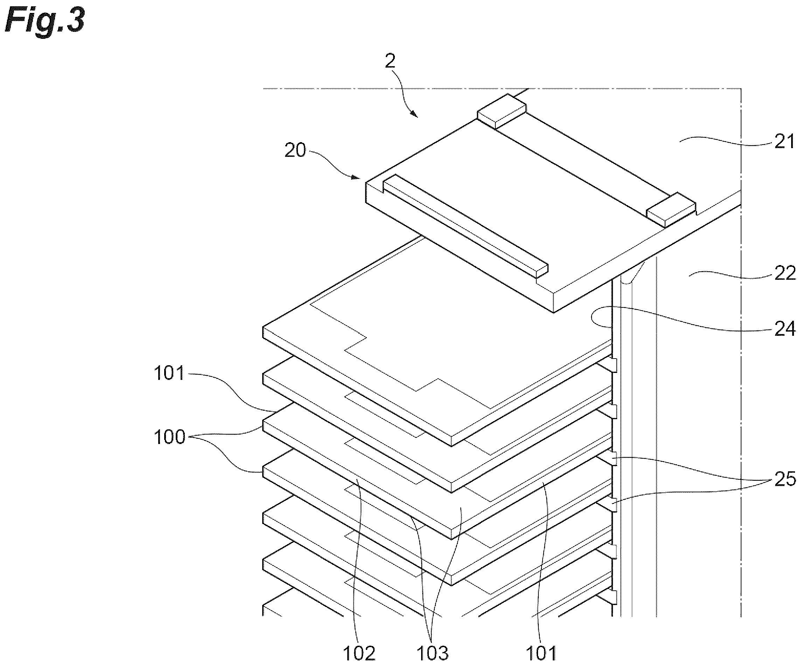

FIG. 3 is an enlarged view showing the cassette 2 storing a plurality of slides 100. The slide 100 is inserted into a storage space formed inside the housing 20 through the opening 24, and the other main surface 103 of the slide 100 is held by the holding plates 25, 25. The pair of long side portions 101 face the pair of first side wall portions 22, respectively, in the lateral direction of the cassette 2. One of the pair of short side portions 102 protrudes to the outside of the housing 20 from the opening 24. The other of the pair of short side portions 102 faces the second side wall portion 23 in the longitudinal direction of the cassette 2. The protruding length of the slide 100 is, for example, approximately 16.5 mm. Inside the cassette 2, the slide 100 is surrounded by the pair of first side wall portions 22 and the second side wall portion 23.

Referring again to FIG. 1, the imaging unit 4 includes a stage 41 on which the slide 100 holding the specimen S is placed, a light source 42 that irradiates the specimen S with flash of light L0, a light guiding optical system 43 including an objective lens 46a disposed so as to face the specimen S sealed on the slide 100 on the stage 41, and a two-dimensional imaging element 44 that images a light image of the specimen S guided by the light guiding optical system 43.

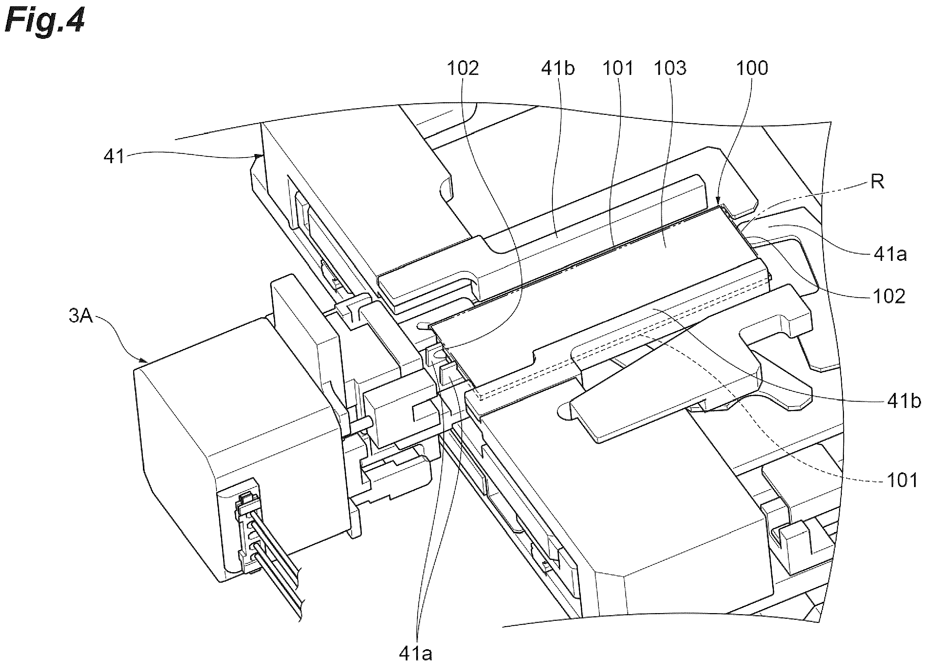

FIG. 4 is a perspective view showing a part of the stage 41. As shown in FIG. 4, the slide 100 transported by the slide holding unit 3A is placed on a placement region R on the stage 41. The shape of the placement region R corresponds to the shape of the slide 100, and is, for example, rectangular. The stage 41 has a plurality of positioning portions 41a and a pair of wall portions 41b. The plurality of positioning portions 41a and the pair of wall portions 41b are disposed so as to surround the placement region R, and position the slide 100 so as to be disposed in the placement region R on the stage 41.

The plurality of positioning portions 41a are configured to include portions facing each other in the longitudinal direction of the placement region R. The plurality of positioning portions 41a position the slide 100 in the longitudinal direction of the placement region R when the slide 100 is placed on the placement region R on the stage 41. In FIG. 4, two positioning portions 41a and one positioning portion 41a face each other in the longitudinal direction of the placement region R.

The pair of wall portions 41b face each other in the lateral direction of the placement region R. The pair of wall portions 41b extend along the longitudinal direction of the placement region R. That is, the pair of wall portions 41b are disposed so as to extend along the pair of long side portions 101 of the slide 100, respectively, when the slide 100 is placed on the stage 41. For example, each wall portion 41b extends along a part of the long side portion 101. The pair of wall portions 41b are located on the respective extension lines of the first arm 52A and the second arm 62A described later.

The distance between the pair of wall portions 41b corresponds to the width of the slide 100, and is, for example, equal to or greater than the width of the slide 100. In the present embodiment, the distance between the pair of wall portions 41b is greater than the width of the slide 100, and a gap is formed between the slide 100 placed in the placement region R and at least one of the pair of wall portions 41b. The height of the wall portion 41b is greater than the thickness of the slide 100. In the present embodiment, the height of the wall portion 41b is greater than the height of each of the plurality of positioning portions 41a.

The pair of wall portions 41b position the slide 100 in the lateral direction of the placement region R when the slide 100 is placed on the placement region R on the stage 41. Specifically, when the slide 100 is disposed between the pair of wall portions 41b, the pair of wall portions 41b restrict movement of the slide 100 in the width direction (Y direction described later). For example, when the slide 100 moves along the width direction, movement of the slide 100 in the width direction is restricted by the slide 100 coming into contact with one of the pair of wall portions 41b. In addition, when the slide 100 is disposed between the pair of wall portions 41b, the pair of wall portions 41b restrict rotational movement of the slide 100 around the thickness direction (Z direction described later) of the slide 100 as a central axis.

The light source 42 is disposed on the bottom surface side of the stage 41. As the light source 42, for example, a laser diode (LD), a light emitting diode (LED), a superluminescent diode (SLD), or a flash lamp type light source such as a xenon flash lamp is used.

The light guiding optical system 43 is composed of an illumination optical system 45 disposed between the light source 42 and the stage 41, and a microscope optical system 46 disposed between the stage 41 and the two-dimensional imaging element 44. The illumination optical system 45 has, for example, a Köhler illumination optical system composed of a condenser lens 45a and a projection lens 45b, and guides light from the light source 42 to irradiate the specimen S with uniform light. The microscope optical system 46 has an objective lens 46a and an imaging lens 46b disposed on the subsequent stage side (two-dimensional imaging element 44 side) of the objective lens 46a, and guides a light image of the specimen S to a light receiving surface 44a of the two-dimensional imaging element 44.

The two-dimensional imaging element 44 is an imaging element having a plurality of pixel rows on the light receiving surface 44a. Examples of the two-dimensional imaging element 44 include a CCD image sensor and a CMOS image sensor. The two-dimensional imaging element 44 sequentially images the light image of the specimen S guided by the light guiding optical system 43 at a predetermined frame rate based on input of a trigger signal output from the computer 5, and outputs image data acquired by imaging to the computer 5.

The computer 5 is physically configured to include a memory such as a RAM and a ROM, a processor (arithmetic circuit) such as a CPU, a communication interface, a storage portion such as a hard disk, and a display portion such as a display. Examples of the computer 5 include a personal computer, a microcomputer, a cloud server, and a smart device (smartphone, tablet terminal, and the like). For example, the computer 5 functions as a control portion that controls the slide holding unit 3A.

FIG. 5 is a perspective view showing the slide holding unit 3A holding the slide 100. As shown in FIG. 5, the slide holding unit 3A is a unit for holding the slide 100. The pair of long side portions 101 of the slide 100 are arranged along the Y direction and extend along the X direction. The pair of short side portions 102 are arranged along the X direction and extend along the Y direction. The pair of main surfaces 103 face each other in the Z direction and extend perpendicularly to the Z direction. The slide holding unit 3A holds the slide 100 by the first arm 52A and the second arm 62A described later holding the slide 100 at the pair of long side portions 101. The slide holding unit 3A is configured to be movable in the horizontal direction and the vertical direction. The slide holding unit 3A transports the slide 100 from the cassette 2 to the imaging unit 4 by moving while holding the slide 100.

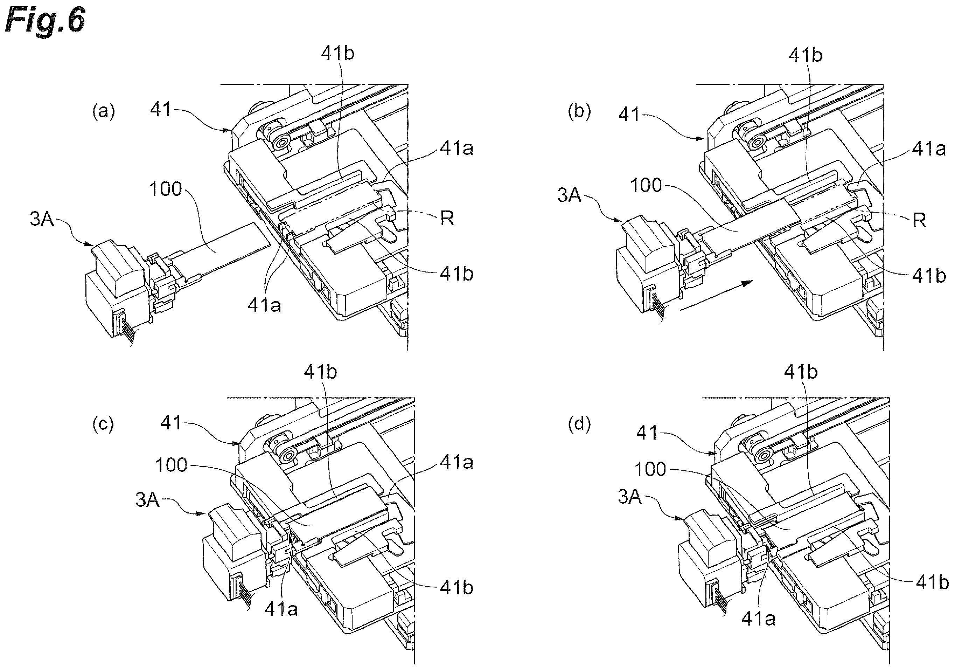

(a), (b), (c), and (d) in FIG. 6 are diagrams for describing an operation in which the slide holding unit 3A places the slide 100 on the imaging unit 4. First, the slide holding unit 3A moves to the vicinity of the stage 41 of the imaging unit 4 (see FIG. 6(a)). Next, the slide holding unit 3A moves such that the slide 100 enters between the pair of wall portions 41b (see FIG. 6(b)). At this time, the slide 100 is guided by the pair of wall portions 41b, and is positioned in the width direction of the placement region R in a plan view. Subsequently, the slide holding unit 3A moves such that the slide 100 is positioned on the placement region R of the stage 41 in a plan view (see FIG. 6(c)). Subsequently, the slide holding unit 3A moves downward, whereby the position of the slide 100 becomes equal to or lower than the height of the plurality of positioning portions 41a. Accordingly, the slide 100 is positioned in the longitudinal direction of the placement region R in a plan view (see FIG. 6(d)). Finally, the slide holding unit 3A releases the holding of the slide 100 positioned on the placement region R in a plan view, whereby the slide 100 is placed on the placement region R of the stage 41.

### [Configuration of Slide Holding Unit]

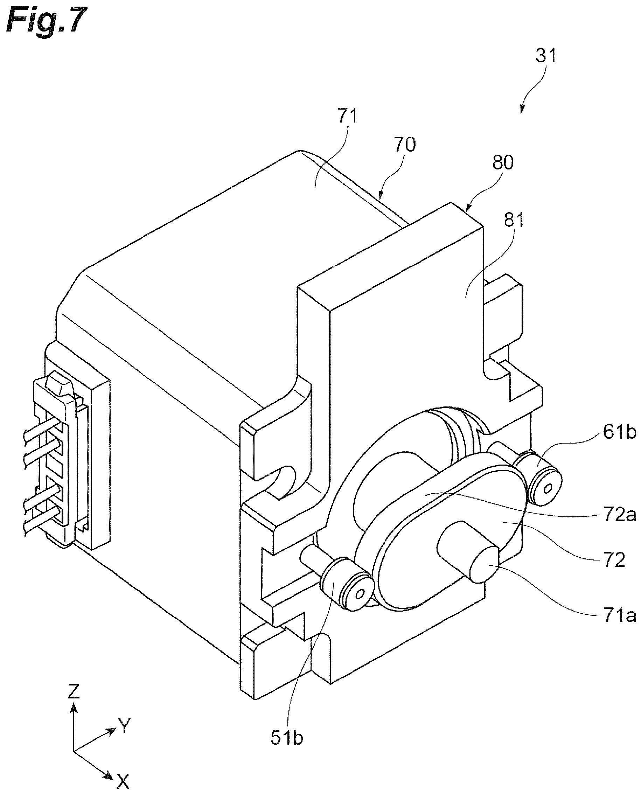

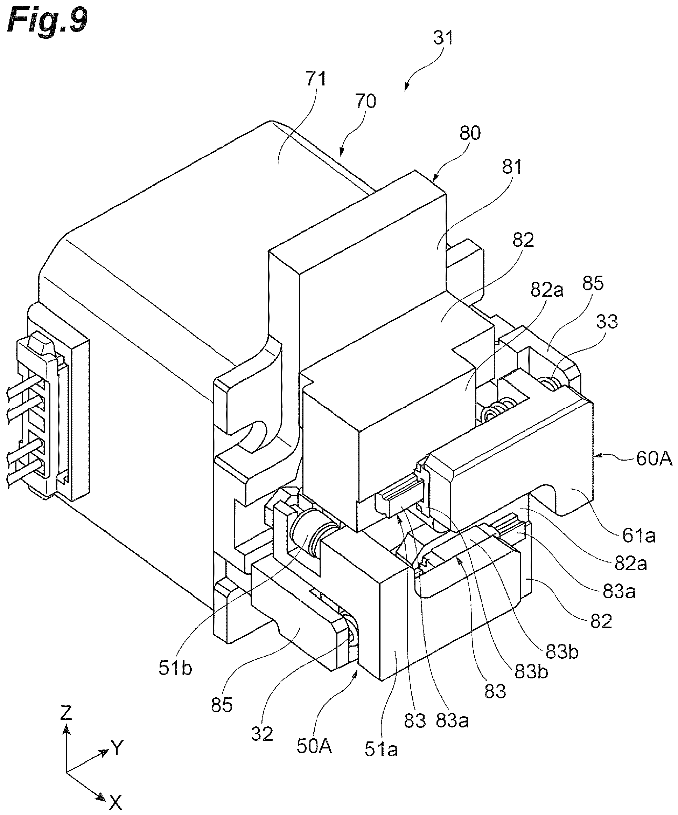

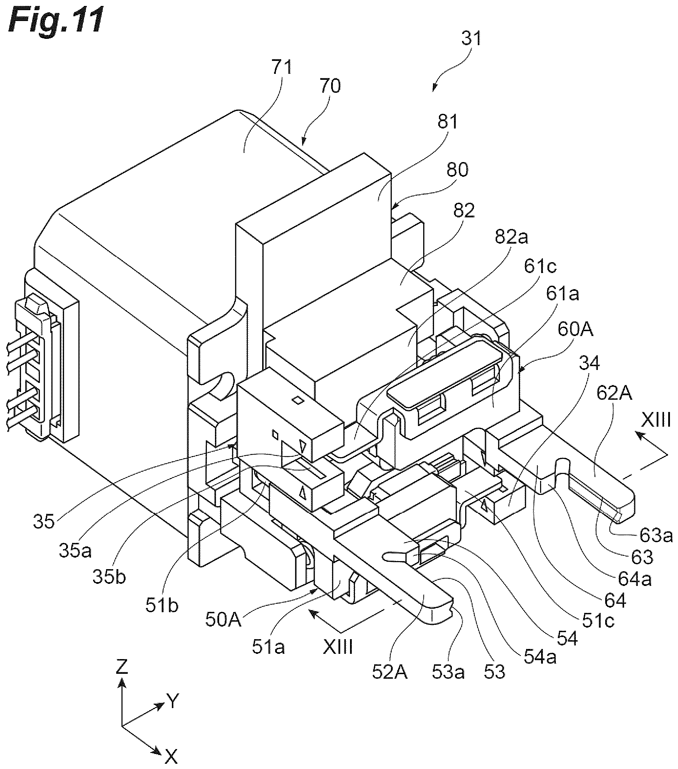

The slide holding unit 3A will be described in detail with reference to FIGS. 5 and 7 to 11. FIGS. 7 to 11 are perspective views showing the whole or a part of the slide holding unit 3A. As shown in FIG. 5, the slide holding unit 3A includes a drive portion 31, a first movable portion 50A, a second movable portion 60A, a first biasing member 32, a second biasing member 33 (see FIG. 9), a first sensor 34, and a second sensor 35. Hereinafter, the height direction of the slide holding unit 3A is defined as the Z direction (third direction), the direction perpendicular to the Z direction is defined as the X direction (first direction), and the direction perpendicular to the Z direction and the X direction is defined as the Y direction (second direction). In addition, the positive side of the Y direction (right side in FIG. 5) is defined as the right side, the negative side of the Y direction (left side in FIG. 5) is defined as the left side, the positive side of the Z direction (upper side in FIG. 5) is defined as the upper side, and the negative side of the Z direction (lower side in FIG. 5) is defined as the lower side.

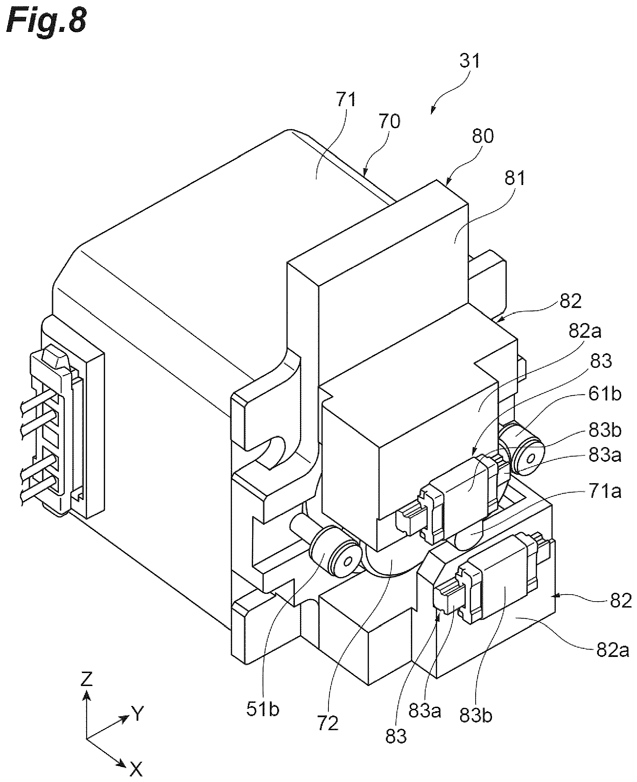

FIGS. 7 and 8 are perspective views showing the drive portion 31. The drive portion 31 has a drive mechanism 70 and a support mechanism 80. In FIG. 7, illustration of a part of the support mechanism 80 is omitted. The drive mechanism 70 includes a motor 71 and a cam portion 72. The cam portion 72 is rotated by the motor 71. In the present embodiment, the cam portion 72 is provided on an output shaft 71a of the motor 71, and is rotated around the output shaft 71a extending along the X direction by the driving force of the motor 71. The cam portion 72 has a shape in which a dimension in the major axis direction is larger than a dimension in the minor axis direction. For example, the cam portion 72 has an elliptical plate shape extending perpendicularly to the X direction.

The support mechanism 80 has a support plate 81, two rail support portions 82, and two linear motion guides 83. The support plate 81 is fixed to the motor 71. As shown in FIG. 8, the two rail support portions 82 are provided so as to sandwich the cam portion 72 in the Y direction. The two linear motion guides 83 are provided on the X-direction surfaces 82a of the two rail support portions 82, respectively. Each linear motion guide 83 includes a guide rail 83a extending along the Y direction and a slider 83b slidable along the guide rail 83a.

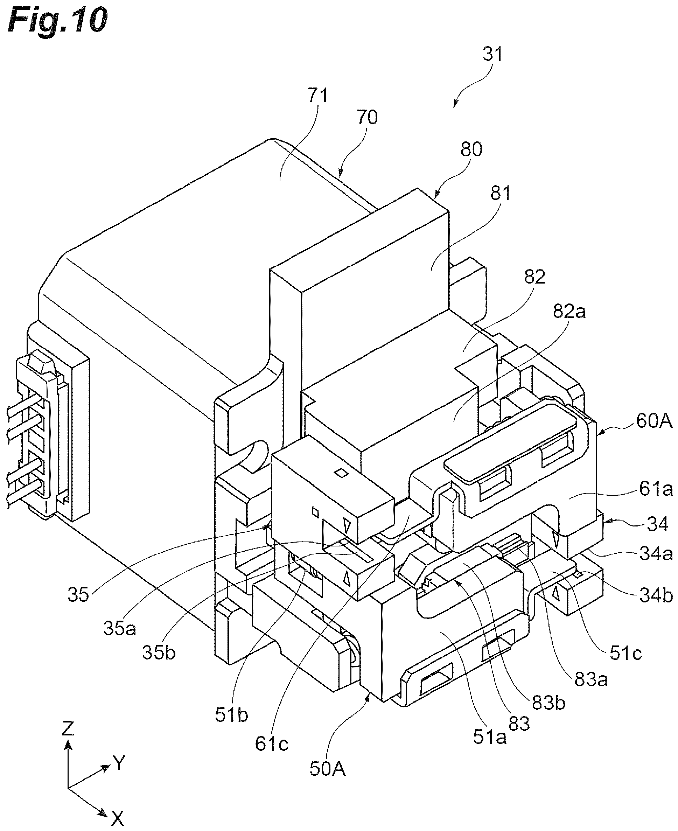

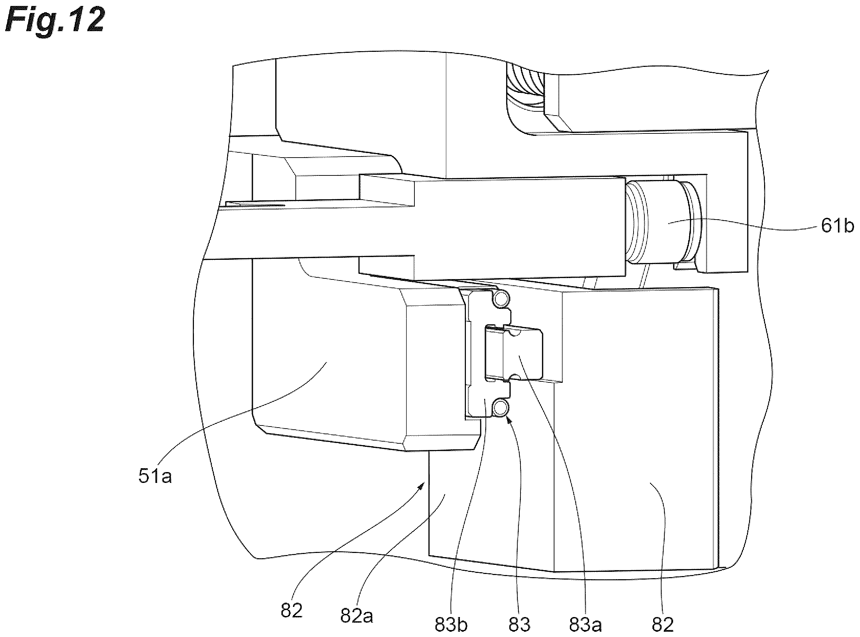

FIGS. 9 to 11 are perspective views showing the slide holding unit 3A. In FIGS. 9 and 10, illustration of a part of the slide holding unit 3A is omitted. The first movable portion 50A is a first movable assembly having a first body portion 51a, a first cam follower 51b, a first detection plate 51c, and a first arm 52A (hand). In FIG. 9, illustration of the first detection plate 51c, the first arm 52A, the first sensor 34, and the second sensor 35 is omitted, and in FIG. 10, illustration of the first arm 52A is omitted. FIG. 12 is an enlarged view of the linear motion guide 83 and the first body portion 51a.

As shown in FIGS. 9 and 12, the first body portion 51a is attached to the slider 83b of the lower linear motion guide 83. Therefore, the first movable portion 50A is supported by the support mechanism 80 so as to be movable along the Y direction. The first body portion 51a extends from the lower linear motion guide 83 to the first cam follower 51b.

With reference to FIGS. 9 to 11, the first cam follower 51b is fixed to the first body portion 51a. The first cam follower 51b is provided at a position overlapping the cam portion 72 when viewed from the Y direction (see FIG. 7). The first cam follower 51b is in contact with an outer peripheral surface 72a of the cam portion 72 (see FIG. 7). The first detection plate 51c extends from the first body portion 51a toward the right side in the Y direction.

The first arm 52A extends from the first body portion 51a along the X direction. In the present embodiment, the first arm 52A is provided at a position overlapping the first cam follower 51b when viewed from the X direction. The first arm 52A extends on an extension line of the central axis of the first cam follower 51b.

The first arm 52A includes a contact surface 53 and a protruding portion 54. The contact surface 53 is in contact with the slide 100. The contact surface 53 is provided on the second arm 62A side, and extends along the X direction to the tip of the first arm 52A (the end portion on the side opposite to the first body portion 51a). The protruding portion 54 is formed on the proximal end side (first body portion 51a side) relative to the contact surface 53 with the slide 100. The protruding portion 54 protrudes toward the second arm 62A side relative to the contact surface 53.

The second movable portion 60A is a second movable assembly having a second body portion 61a, a second cam follower 61b, a second detection plate 61c, and a second arm 62A (hand). In FIG. 9, illustration of the second detection plate 61c and the second arm 62A is omitted, and in FIG. 10, illustration of the second arm 62A is omitted.

The second body portion 61a is supported by the slider 83b of the upper linear motion guide 83 so as to be movable along the Y direction. That is, the second movable portion 60A is supported by the support mechanism 80. The second body portion 61a extends from the upper linear motion guide 83 to the second cam follower 61b.

With reference to FIGS. 9 to 11, the second cam follower 61b is fixed to the second body portion 61a. The second cam follower 61b faces the first cam follower 51b in the Y direction. The second cam follower 61b is provided at a position overlapping the cam portion 72 when viewed from the Y direction. The second detection plate 61c extends from the second body portion 61a toward the left side in the Y direction.

The second arm 62A faces the first arm 52A in the Y direction. The second arm 62A extends from the second body portion 61a along the X direction. For example, the first arm 52A and the second arm 62A extend parallel to each other. The second arm 62A is provided at a position overlapping the second cam follower 61b when viewed from the X direction. The second arm 62A extends on an extension line of the central axis of the second cam follower 61b.

The second arm 62A includes a contact surface 63 and a protruding portion 64. The contact surface 63 is in contact with the slide 100. The contact surface 63 is provided on the first arm 52A side, and extends along the X direction to the tip of the second arm 62A (the end portion on the side opposite to the second body portion 61a). The protruding portion 64 is formed on the proximal end side (second body portion 61a side) relative to the contact surface 63 with the slide 100. The protruding portion 64 protrudes toward the first arm 52A side relative to the contact surface 63.

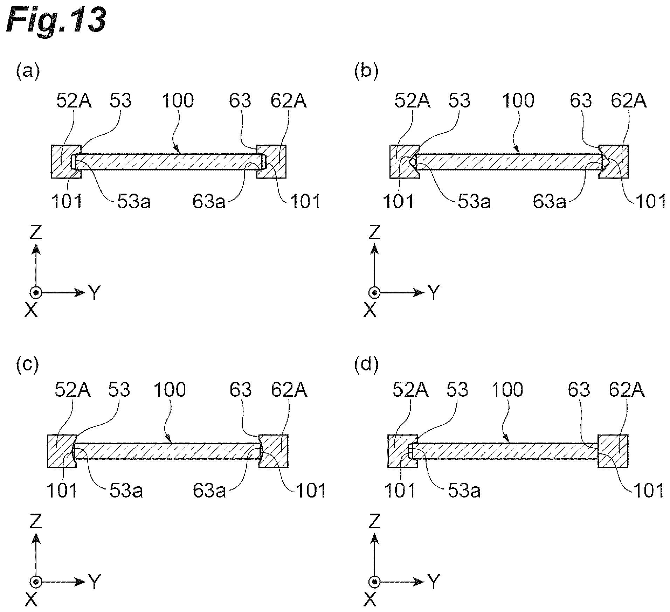

FIG. 13 is an end view of the first arm 52A and the second arm 62A taken along line XIII-XIII. As shown in FIG. 13, the contact surface 53 and the contact surface 63 are in contact with the slide 100 at each of the pair of long side portions 101 of the slide 100. A length L1 of the contact surface 53 of the first arm 52A with the slide 100 along the X direction is 16.5 mm or less (see FIG. 5). A length L1 of the contact surface 63 of the second arm 62A with the slide 100 along the X direction is 16.5 mm or less (see FIG. 5). A groove portion 53a extending along the Y direction is formed in the contact surface 53. A groove portion 63a extending along the Y direction is formed in the contact surface 63. Therefore, the groove portions 53a and 63a are formed in both the contact surface 53 of the first arm 52A with the slide 100 and the contact surface 63 of the second arm 62A with the slide 100.

The shape of the groove portion 53a in a cross section intersecting the X direction is a shape recessed toward the side opposite to the second arm 62A. The shape of the groove portion 63a in a cross section intersecting the X direction is a shape recessed toward the side opposite to the first arm 52A. In FIG. 13(a), the shape of the groove portions 53a and 63a in a cross section intersecting the X direction is a U-shape (trapezoidal shape). For example, the groove portions 53a and 63a are composed of a bottom surface and two inclined surfaces. The bottom surface extends perpendicularly to the Y direction. The two inclined surfaces are inclined so as to be farther apart from each other as they move away from the bottom surface. In FIG. 13(b), the shape of the groove portions 53a and 63a in a cross section intersecting the X direction is a V-shape. For example, the groove portions 53a and 63a are composed of two inclined surfaces extending along the X direction. The two inclined surfaces are inclined so as to be farther apart from each other as they move away from the bottom of the groove portions 53a and 63a. In FIG. 13(c), the shape of the groove portions 53a and 63a in a cross section intersecting the X direction is an arc shape. For example, the groove portions 53a and 63a are composed of a curved surface that curves in a concave shape.

It is sufficient that the groove portion 53a or the groove portion 63a is formed in at least one of the contact surface 53 of the first arm 52A with the slide 100 and the contact surface 63 of the second arm 62A with the slide 100. As shown in FIG. 13(d), the groove portion 63a need not be provided on the contact surface 63. Even in this case, when the first arm 52A and the second arm 62A are closed, the first arm 52A and the second arm 62A come into contact with the slide 100 at three points, so that the slide 100 can be reliably held.

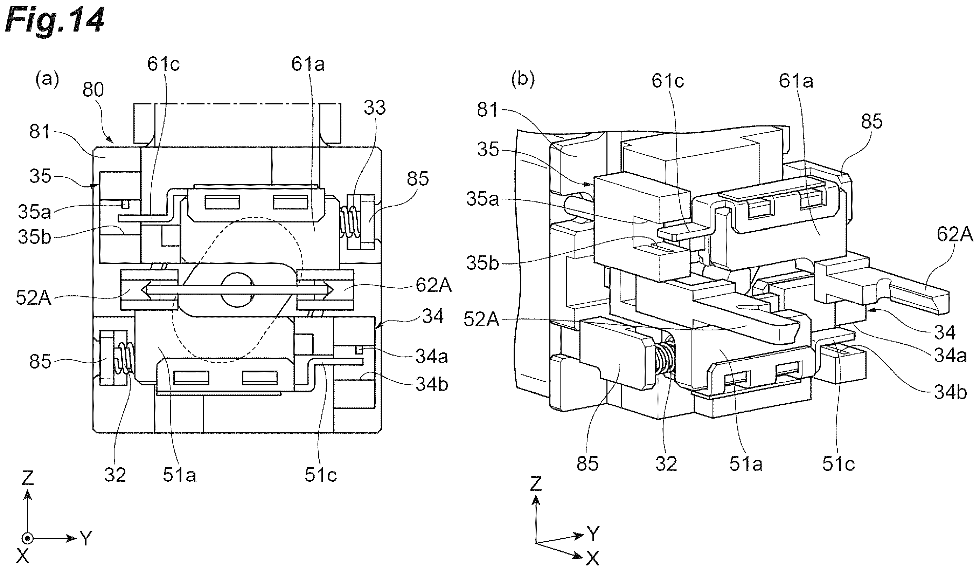

FIG. 14(a) is a front view showing the slide holding unit 3A. FIG. 14(b) is a perspective view showing a part of the slide holding unit 3A. As shown in FIG. 14(a), the support mechanism 80 has two support portions 85 that support the first biasing member 32 and the second biasing member 33, respectively. One support portion 85 extends from the support plate 81 along the X direction to the left side in the Y direction of the first body portion 51a. The other support portion 85 extends from the support plate 81 along the X direction to the right side in the Y direction of the second body portion 61a.

The first biasing member 32 biases the first movable portion 50A such that the first arm 52A approaches the second arm 62A. The second biasing member 33 biases the second movable portion 60A such that the second arm 62A approaches the first arm 52A. In the present embodiment, the first biasing member 32 biases the first body portion 51a toward the right side on the left side of the first body portion 51a in the Y direction. The second biasing member 33 biases the second body portion 61a toward the left side on the right side of the second body portion 61a in the Y direction. For example, the first biasing member 32 is a coil spring disposed in a compressed state between the first body portion 51a and one support portion 85. The second biasing member 33 is a coil spring disposed in a compressed state between the second body portion 61a and the other support portion 85. In this way, the first biasing member 32 and the second biasing member 33 always bias the first arm 52A and the second arm 62A inward by biasing the first movable portion 50A and the second movable portion 60A inward.

The first biasing member 32 and the second biasing member 33 are disposed at positions different from each other when viewed from the Y direction. In the present embodiment, the first biasing member 32 and the second biasing member 33 are arranged along the Z direction when viewed from the Y direction. For example, the first biasing member 32 is located above and to the right of the cam portion 72 when viewed from the X direction. The second biasing member 33 is located below and to the left of the cam portion 72 when viewed from the X direction.

The first sensor 34 is turned on and off in accordance with the position of the first movable portion 50A in the Y direction. In the present embodiment, the first sensor 34 is turned on and off in accordance with the position of the first detection plate 51c in the Y direction. The first sensor 34 has a light emitting portion 34a and a light receiving portion 34b. The light emitting portion 34a has a light source that emits irradiation light such as infrared light. The light receiving portion 34b has a photodetector that receives the irradiation light. For example, the first sensor 34 is in an on state when the first detection plate 51c is not positioned between the light emitting portion 34a and the light receiving portion 34b and the light receiving portion 34b receives the irradiation light. The first sensor 34 is in an off state when the first detection plate 51c is positioned between the light emitting portion 34a and the light receiving portion 34b to block the irradiation light, and the light receiving portion 34b cannot receive the irradiation light.

The second sensor 35 is turned on and off in accordance with the position of the second movable portion 60A in the Y direction. In the present embodiment, the second sensor 35 has a light emitting portion 35a and a light receiving portion 35b. The light emitting portion 35a emits irradiation light such as infrared light. The light receiving portion 35b receives the irradiation light. The second sensor 35 is turned on and off in accordance with the position of the second detection plate 61c in the Y direction. For example, the second sensor 35 is in an on state when the second detection plate 61c is not positioned between the light emitting portion 35a and the light receiving portion 35b and the light receiving portion 35b receives the irradiation light. The second sensor 35 is in an off state when the second detection plate 61c blocks the irradiation light between the light emitting portion 35a and the light receiving portion 35b, and the light receiving portion 35b cannot receive the irradiation light.

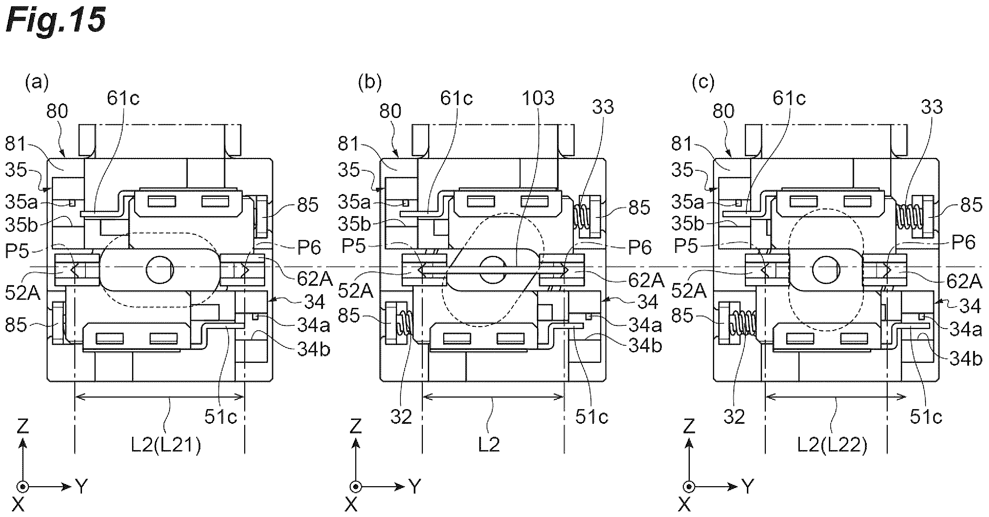

(a), (b), and (c) in FIG. 15 are diagrams for describing the on/off states of the first sensor 34 and the second sensor 35 in accordance with the positions of the first movable portion 50A and the second movable portion 60A. The first sensor 34 and the second sensor 35 are disposed such that, by a combination of on and off states of the first sensor 34 and the second sensor 35, the first state, the second state, and the third state are distinguishable.

In FIG. 15(a), both the first sensor 34 and the second sensor 35 are in an off state. Accordingly, the first sensor 34 and the second sensor 35 identify the first state in which a distance L2 between the first arm 52A and the second arm 62A in the Y direction is larger than the width of the slide 100 between the pair of long side portions 101. The distance L2 between the first arm 52A and the second arm 62A in the Y direction is the distance between a contact point P5 of the first arm 52A with the slide 100 and a contact point P6 of the second arm 62A with the slide 100 (see FIGS. 15(a), 15(b), and 15(c)). The width of the slide 100 is the length of the slide 100 in the Y direction, and in the present embodiment, is the length of the pair of short side portions 102 of the slide 100. Accordingly, for example, a control portion such as the computer 5 identifies, by the first sensor 34 and the second sensor 35, that the first arm 52A and the second arm 62A are in an open state and cannot hold the slide 100.

In FIG. 15(b), one of the first sensor 34 and the second sensor 35 (in the present embodiment, the second sensor 35) is in an on state. Accordingly, the first sensor 34 and the second sensor 35 identify the second state in which the distance L2 between the first arm 52A and the second arm 62A in the Y direction is equal to the width of the slide 100 between the pair of long side portions 101. For example, a control portion such as the computer 5 identifies, by the first sensor 34 and the second sensor 35, that the first arm 52A and the second arm 62A are in a state capable of holding the slide 100.

In FIG. 15(c), both the first sensor 34 and the second sensor 35 are in an on state. Accordingly, the first sensor 34 and the second sensor 35 identify the third state in which the distance L2 between the first arm 52A and the second arm 62A in the Y direction is smaller than the width of the slide 100 between the pair of long side portions 101. Accordingly, the first sensor 34 and the second sensor 35 identify that the first arm 52A and the second arm 62A are in a closed state and cannot hold the slide 100.

### [Opening and Closing Operation of First Arm and Second Arm]

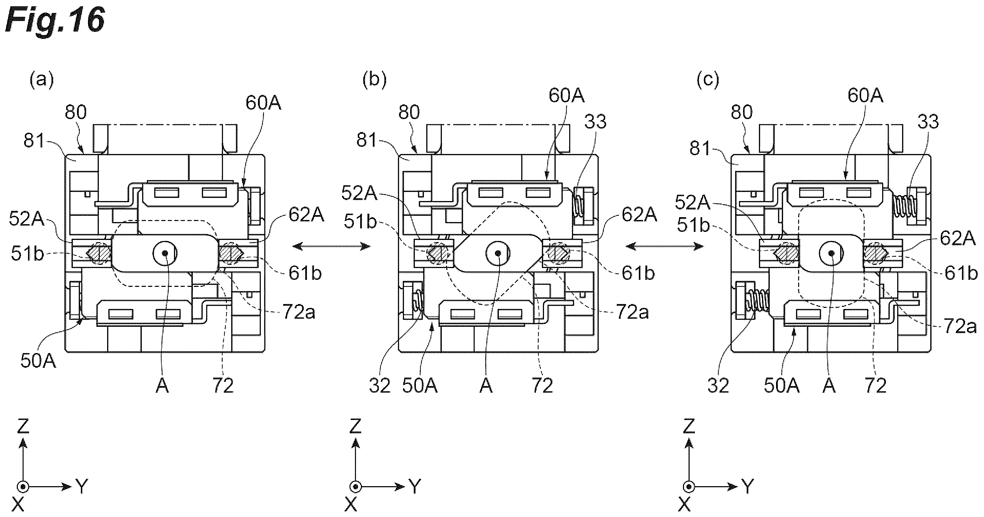

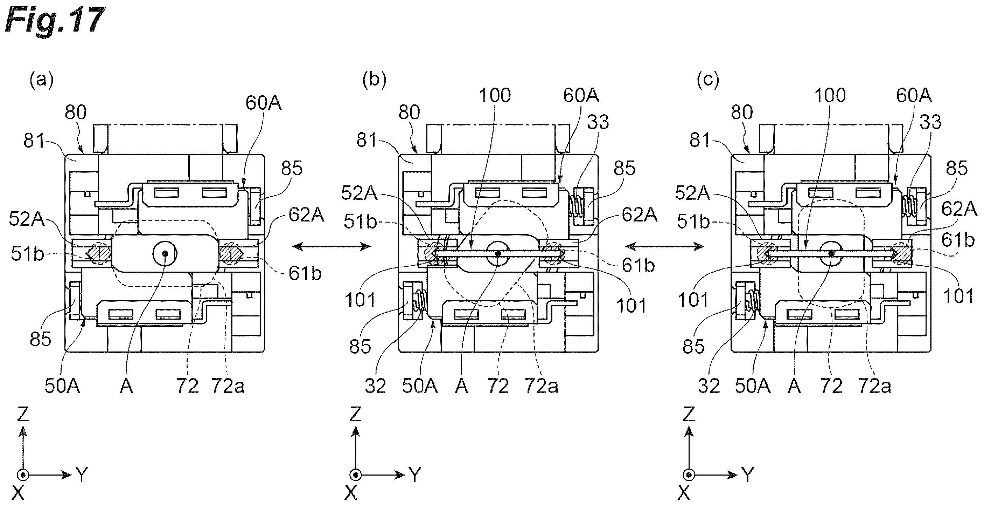

The movement of the first arm 52A and the second arm 62A will be described with reference to FIGS. 16 and 17. FIG. 16 is a diagram showing a case where the slide 100 is not present between the first arm 52A and the second arm 62A in the Y direction. FIG. 17 is a diagram showing a case where the slide 100 is present between the first arm 52A and the second arm 62A in the Y direction. The drive portion 31 is a driver that moves both the first movable portion 50A and the second movable portion 60A in the Y direction. Specifically, the drive portion 31 moves the first movable portion 50A and the second movable portion 60A in the Y direction such that the first arm 52A and the second arm 62A move symmetrically with respect to a symmetry axis A parallel to the X direction.

The first movable portion 50A and the second movable portion 60A move in the Y direction in accordance with the rotation angle of the cam portion 72. Specifically, the first biasing member 32 and the second biasing member 33 always bias the first body portion 51a and the second body portion 61a inward, whereby the first cam follower 51b and the second cam follower 61b are in contact with the outer peripheral surface 72a of the cam portion 72. In accordance with the rotation angle of the cam portion 72, the first cam follower 51b and the second cam follower 61b move along the Y direction while sliding along the outer peripheral surface 72a of the cam portion 72. Along with this, the first arm 52A and the second arm 62A move along the Y direction.

For example, when the first arm 52A and the second arm 62A are opened, the first arm 52A and the second arm 62A are pushed apart by the cam portion 72 rotated such that the major axis direction of the cam portion 72 is along the X direction. When the first arm 52A and the second arm 62A are closed, the cam portion 72 is rotated such that the minor axis direction of the cam portion 72 is along the X direction, and the interval between the first arm 52A and the second arm 62A is narrowed by the first biasing member 32 and the second biasing member 33.

In FIGS. 16(a) and 17(a), the major axis direction of the cam portion 72 is along the X direction. In this case, by causing the first cam follower 51b and the second cam follower 61b to face each other in the major axis direction of the cam portion 72, the distance L2 between the first arm 52A and the second arm 62A in the Y direction is set to a first distance L21 (see FIG. 15). The first distance L21 is larger than the width of the slide 100 between the pair of long side portions 101. In FIGS. 16(b) and 17(b), by rotating the cam portion 72, the first cam follower 51b and the second cam follower 61b are caused to face each other in a predetermined direction other than the major axis direction and the minor axis direction of the cam portion 72. In FIGS. 16(c) and 17(c), by further rotating the cam portion 72, the minor axis direction of the cam portion 72 is along the X direction. In this case, by causing the first cam follower 51b and the second cam follower 61b to face each other in the minor axis direction of the cam portion 72, the distance L2 between the first arm 52A and the second arm 62A in the Y direction is set to a second distance L22. The second distance L22 is smaller than the width of the slide 100.

In FIGS. 16(a), 16(b), and 16(c), the first cam follower 51b of the first movable portion 50A is in contact with the outer peripheral surface 72a of the cam portion 72 by being biased inward by the first biasing member 32. The second cam follower 61b of the second movable portion 60A is in contact with the outer peripheral surface 72a of the cam portion 72 by being biased inward by the second biasing member 33. Therefore, when the slide 100 is not present between the first arm 52A and the second arm 62A, the first cam follower 51b and the second cam follower 61b move along the Y direction while sliding along the outer peripheral surface 72a of the cam portion 72.

In FIG. 17(a), the distance L2 between the first arm 52A and the second arm 62A in the Y direction is the first distance L21 (see FIG. 15(a)). In this case, the first cam follower 51b of the first movable portion 50A is in contact with the outer peripheral surface 72a of the cam portion 72 by being biased inward by the first biasing member 32. The second cam follower 61b of the second movable portion 60A is in contact with the outer peripheral surface 72a of the cam portion 72 by being biased inward by the second biasing member 33.

In FIGS. 17(b) and 17(c), the distance L2 between the first arm 52A and the second arm 62A in the Y direction is equal to the width of the slide 100. In this case, the first arm 52A of the first movable portion 50A is in contact with one long side portion 101 of the slide 100 by being biased inward by the first biasing member 32. The second arm 62A of the second movable portion 60A is in contact with the other long side portion 101 of the slide 100 by being biased inward by the second biasing member 33. In such a case, the first arm 52A and the second arm 62A hold the slide 100 at the pair of long side portions 101. In addition, the first cam follower 51b and the second cam follower 61b move away from the cam portion 72, so that the power of the motor 71 is no longer transmitted to the slide 100.

In this way, the rotational motion of the cam portion 72 caused by the motor 71 is converted into linear motion of the first movable portion 50A and the second movable portion 60A by the linear motion guides 83. In addition, by the motor 71 rotating the cam portion 72 by 90°, it is possible to switch between the state in which the first arm 52A and the second arm 62A are closest to each other and the state in which they are farthest from each other.

When the power of the slide holding unit 3A is turned on, a control portion such as the computer 5 executes an initial process (initialization process) for ascertaining the rotation angle of the cam portion 72. Specifically, the control portion rotates the cam portion 72 by the motor 71 (for example, by a maximum of 90°), and identifies the state in which the first arm 52A and the second arm 62A are farthest from each other (the first state) by the combination of on and off states of the first sensor 34 and the second sensor 35. Accordingly, the control portion identifies that the major axis direction of the cam portion 72 is along the X direction. In the initial process, the control portion may identify the state in which the first arm 52A and the second arm 62A are closest to each other (the second state) by the combination of on and off states of the first sensor 34 and the second sensor 35. Accordingly, the control portion identifies that the minor axis direction of the cam portion 72 is along the X direction. In this way, the control portion ascertains the rotation angle of the cam portion 72 in the initial process.

### [Functions and Effects]

In the slide holding unit 3A, both the first movable portion 50A and the second movable portion 60A move in the Y direction, whereby the first arm 52A and the second arm 62A hold the slide 100 at the pair of long side portions 101. Accordingly, for example, even when the slide 100 is not stored straight in the cassette 2 or when the cassette 2 is placed in a tilted manner, the posture of the slide 100 is easily adjusted when the slide 100 is held by the first arm 52A and the second arm 62A, and as a result, the slide 100 can be reliably held by the first arm 52A and the second arm 62A.

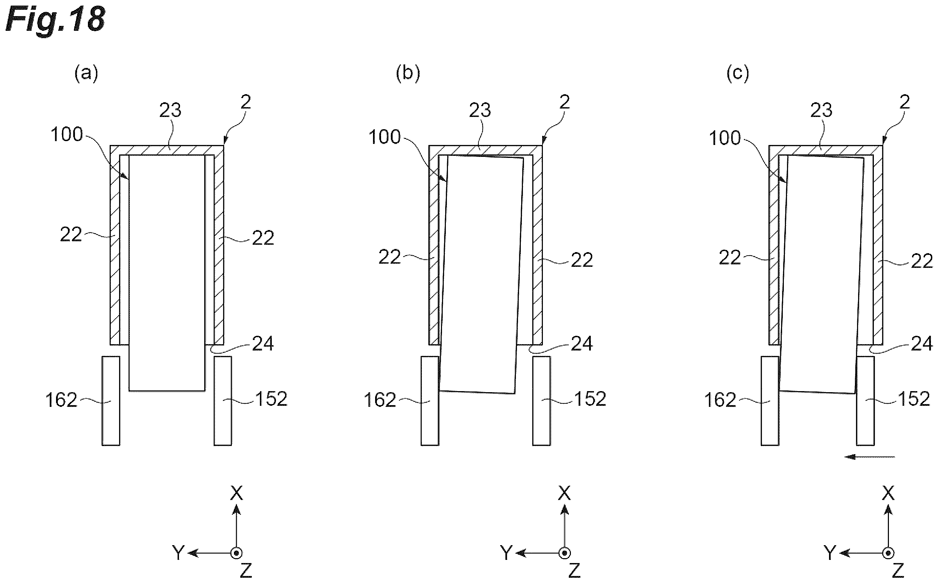

The above-described functions and effects will be specifically described with reference to FIG. 18. (a), (b), and (c) in FIG. 18 are diagrams schematically showing the positional relationship between the cassette 2 and the slide 100. As shown in FIG. 18(a), normally, the slide 100 is stored straight in the cassette 2; however, as shown in FIG. 18(b), there are cases where the slide 100 is not stored straight in the cassette 2.

In the slide holding unit according to the comparative example, one of the first arm 152 and the second arm 162 (for example, only the first arm 152) moves in the Y direction, whereby the first arm 152 and the second arm 162 hold the slide 100. In this case, as shown in FIG. 18(c), there is a risk that the slide holding unit may hold the slide 100 in a tilted posture. In contrast, in the slide holding unit 3A according to the present embodiment, both the first arm 52A and the second arm 62A move in the Y direction, so that the posture of the slide 100 is easily adjusted such that the slide 100 is stored straight with respect to the cassette 2.

Furthermore, according to the findings of the present inventors, by providing a mechanism for preventing the slide 100 from being held in a tilted posture, or a sensor for detecting the posture of the slide 100 with respect to the cassette 2, on the first arm 152 or the second arm 162 of the slide holding unit according to the comparative example, the posture of the slide 100 can be adjusted. However, in the slide holding unit 3A according to the present embodiment, there is fundamentally no need to provide such a mechanism or sensor, and the slide 100 can be reliably held by the first arm 52A and the second arm 62A with a simpler configuration.

The drive portion 31 moves the first movable portion 50A and the second movable portion 60A in the Y direction such that the first arm 52A and the second arm 62A move symmetrically with respect to the symmetry axis A parallel to the X direction (see FIGS. 16 and 17). In this case, the slide 100 can be held more reliably by the first arm 52A and the second arm 62A. For example, the protruding portion of the slide 100 can be positioned more accurately in the Y direction by the first arm 52A and the second arm 62A.

The first movable portion 50A and the second movable portion 60A move in the Y direction in accordance with the rotation angle of the cam portion 72. In this case, the first movable portion 50A and the second movable portion 60A can be moved in the Y direction using the motor 71 and the cam portion 72.

The cam portion 72 sets the distance L2 between the first arm 52A and the second arm 62A to a distance larger than the width of the slide 100 by causing the first movable portion 50A and the second movable portion 60A to face each other in the major axis direction. The cam portion 72 sets the distance L2 between the first arm 52A and the second arm 62A to a distance smaller than the width of the slide 100 by causing the first movable portion 50A and the second movable portion 60A to face each other in the minor axis direction. In this case, by changing the rotation angle of the cam portion 72 to change the distance between the first arm 52A and the second arm 62A between the first distance L21 and the second distance L22, it is possible to switch between the state in which the slide 100 is not held by the first arm 52A and the second arm 62A (FIGS. 16(a) and 17(a)) and the state in which the slide 100 can be held by the first arm 52A and the second arm 62A (FIGS. 16(b) and 17(b)).

The first biasing member 32 biases the first movable portion 50A such that the first arm 52A approaches the second arm 62A. The second biasing member 33 biases the second movable portion 60A such that the second arm 62A approaches the first arm 52A. In this case, for example, even when power is suddenly no longer supplied to the slide holding unit 3A, it is possible to prevent the holding of the slide 100 by the first arm 52A and the second arm 62A from being released and the slide 100 from falling. In addition, when controlling the first arm 52A and the second arm 62A by the power of the motor 71 or the like, complex control is required in order to hold the slide 100 without damaging it. For example, if the distance L2 between the first arm 52A and the second arm 62A in the Y direction falls below the width of the slide 100, the slide 100 will be damaged by the first arm 52A and the second arm 62A, so it is necessary to control the distance L2 with high precision so as to be the same size as the width of the slide 100. In contrast, when the first arm 52A and the second arm 62A are closed by the first biasing member 32 and the second biasing member 33, the slide 100 can be held easily and stably.

The first biasing member 32 and the second biasing member 33 are disposed at positions different from each other when viewed from the Y direction. In this case, the slide holding unit 3A can be reduced in size.

The first sensor 34 and the second sensor 35 are capable of distinguishing, by the combination of on and off states of the first sensor 34 and the second sensor 35, the first state in which the distance L2 between the first arm 52A and the second arm 62A is larger than the width of the slide 100, the second state in which the distance L2 between the first arm 52A and the second arm 62A is equal to the width of the slide 100, and the third state in which the distance L2 between the first arm 52A and the second arm 62A is smaller than the width of the slide 100. In this case, the distance L2 between the first arm 52A and the second arm 62A can be ascertained based on the on/off states of the first sensor 34 and the second sensor 35.

The groove portion 53a is formed in the contact surface 53 of the first arm 52A, and the groove portion 63a is formed in the contact surface 63 of the second arm 62A. In this case, the slide 100 can be held more reliably by the first arm 52A and the second arm 62A. In addition, since the groove portions 53a and 63a are formed in both the contact surfaces 53 and 63, when the first arm 52A and the second arm 62A are closed, the slide 100 can be held while being scooped up. Accordingly, the slide 100 can be easily held. In addition, when the first arm 52A and the second arm 62A are opened, the pair of long side portions 101 of the slide 100 slide off the groove portions 53a and 63a, so that the holding of the slide 100 can be easily released.

The protruding portion 54 is formed on the proximal end side relative to the contact surface 53, and protrudes toward the second arm 62A side relative to the contact surface 53. The protruding portion 64 is formed on the proximal end side relative to the contact surface 63, and protrudes toward the first arm 52A side relative to the contact surface 63. In this case, when storing the slide 100 in the cassette 2, the end portion of the slide 100 can be pushed in by the protruding portions 54 and 64, and the slide 100 can be reliably stored in the cassette 2.

Each of the length L1 of the contact surface 53 (contact portion) of the first arm 52A with the slide 100 along the X direction and the length L1 of the contact surface 63 (contact portion) of the second arm 62A with the slide 100 along the X direction is 16.5 mm or less. In this case, the slide 100 stored in the cassette 2 can be reliably held.

In the image acquisition apparatus 1, the pair of wall portions 41b are disposed so as to extend along the pair of long side portions 101 of the slide 100 when the slide 100 is placed on the stage 41. Accordingly, the slide 100 can be placed on the stage 41 while being guided by the pair of wall portions 41b.

In the image acquisition apparatus 1, when the slide 100 is disposed between the pair of wall portions 41b, movement of the slide 100 in the Y direction is restricted by the pair of wall portions 41b. Accordingly, for example, even when the slide 100 adheres to the first arm 52A or the second arm 62A due to a label protruding from the slide 100 in the Y direction, it is possible to prevent the slide 100 from moving in the Y direction together with the first arm 52A or the second arm 62A.

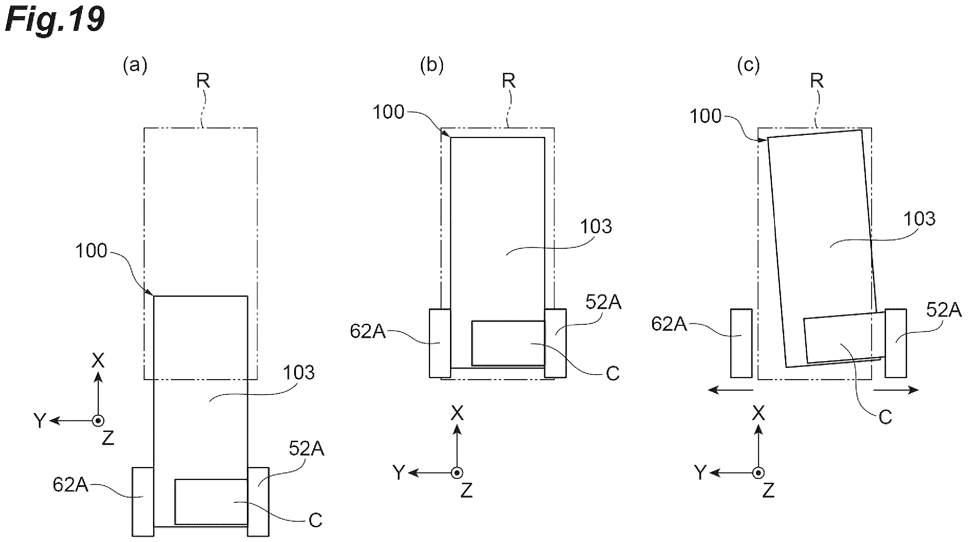

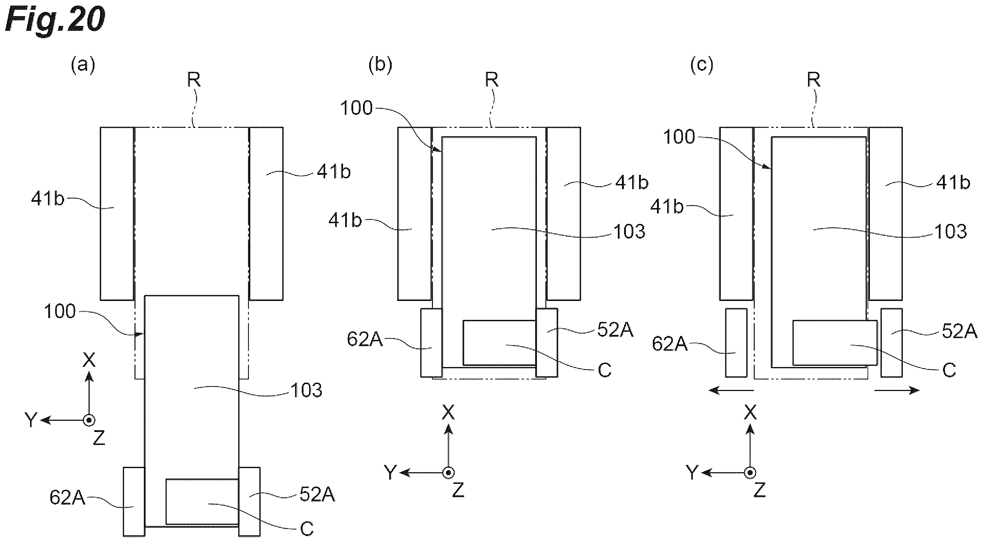

The above-described functions and effects will be specifically described with reference to FIGS. 19 and 20. FIG. 19 is a schematic diagram showing a transfer operation of the slide 100 to the placement region R by the slide holding unit 3A. FIG. 20 is a schematic diagram showing a transfer operation of the slide 100 to the placement region R by the slide holding unit 3A. In FIGS. 19 and 20, a label C is affixed on one of the main surfaces 103 of the slide 100 in order to identify the slide 100 in the image acquisition apparatus 1.

As shown in FIGS. 19(a) and 19(b), the slide 100 held by the first arm 52A and the second arm 62A is transported to a position above the placement region R provided on the stage of the imaging unit according to the comparative example. Here, the label C adheres to the first arm 52A, which may cause the slide 100 to adhere to the first arm 52A. In this case, as shown in FIG. 19(c), when the first arm 52A and the second arm 62A move in directions away from each other and the holding of the slide 100 is released, the slide 100 adheres to the first arm 52A due to, for example, the label C protruding from the slide 100 in the Y direction, and the slide 100 moves in the Y direction together with the first arm 52A.

In contrast, in FIGS. 20(a) and 20(b), the slide 100 held by the first arm 52A and the second arm 62A is transported to the placement region R on the stage 41 of the imaging unit 4 according to the present embodiment. Here, similarly to the above, the label C adheres to the first arm 52A, which may cause the slide 100 to adhere to the first arm 52A; however, in FIG. 20(c), when the first arm 52A and the second arm 62A move in directions away from each other and the holding of the slide 100 is released, movement of the slide 100 in the Y direction is restricted by the pair of wall portions 41b. Accordingly, the slide 100 is separated from the first arm 52A, whereby movement of the slide 100 in the Y direction together with the first arm 52A is prevented.

### [Modification Examples]

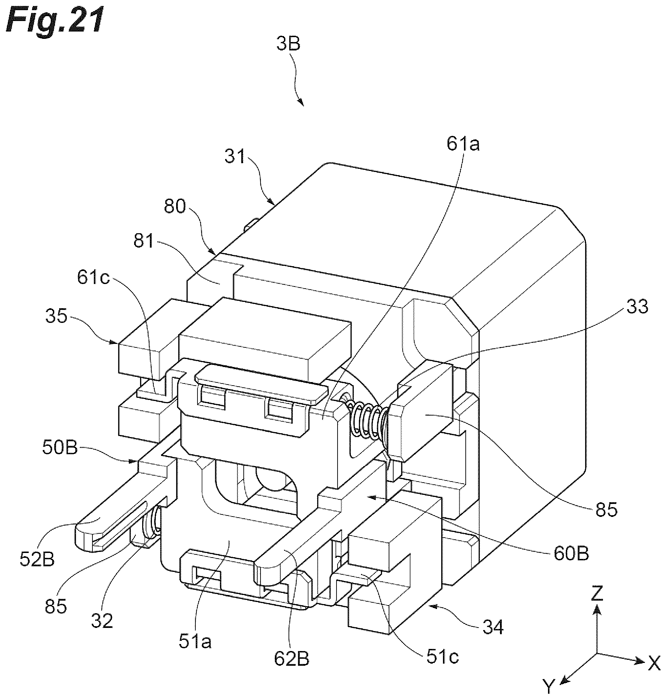

In the slide holding unit 3B according to the first modification example shown in FIG. 21, the first movable portion 50B has the same configuration as the first movable portion 50A except that the first movable portion 50B has a first arm 52B instead of the first arm 52A. The first arm 52B has the same configuration as the first arm 52A except that the first arm 52B does not include the protruding portion 54. The first arm 52B includes the contact surface 53. The second movable portion 60B has a second arm 62B instead of the second arm 62A. The second arm 62B has the same configuration as the second arm 62A except that the second arm 62B does not include the protruding portion 64. In the slide holding unit 3B according to the first modification example, similarly to the slide holding unit 3A according to the above-described embodiment, the slide 100 can be reliably held by the first arm 52B and the second arm 62B.

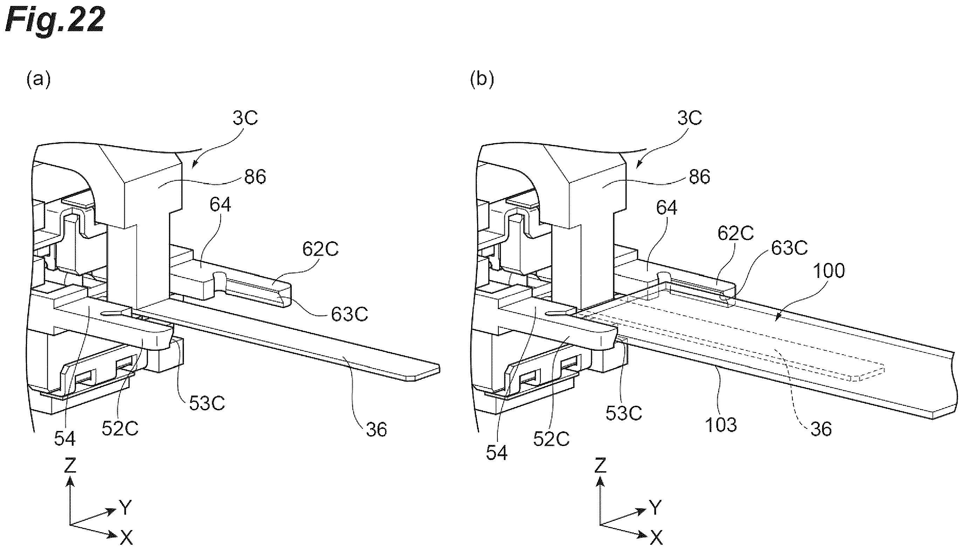

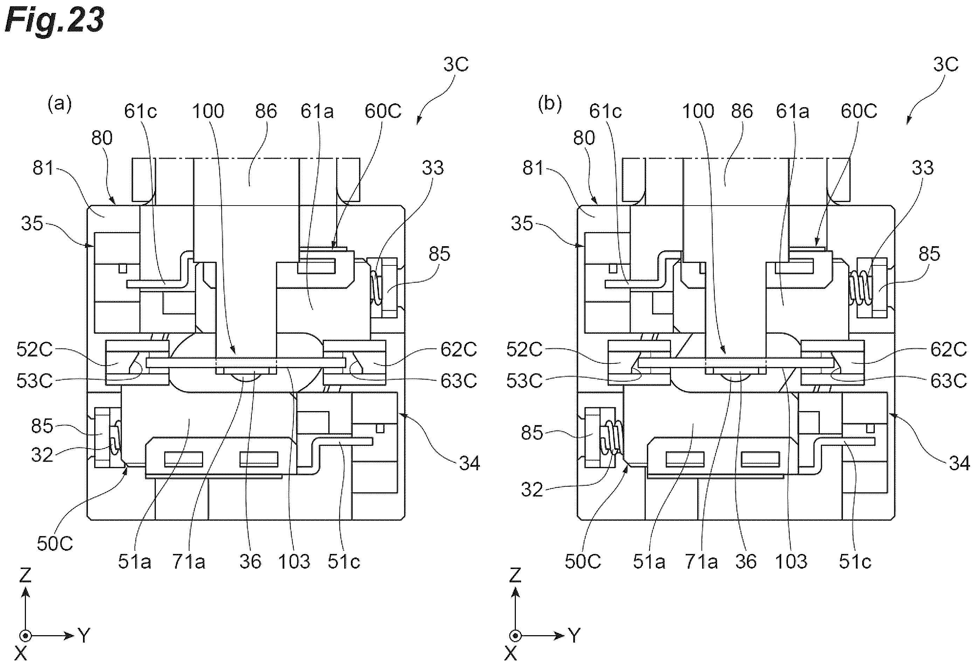

The slide holding unit 3C according to the second modification example shown in FIGS. 22 and 23 further includes a support member 36. The first movable portion 50C has the same configuration as the first movable portion 50A except that the first movable portion 50C has a first arm 52C instead of the first arm 52A. The first arm 52C has the same configuration as the first arm 52A except that the first arm 52C has a contact surface 53C instead of the contact surface 53. The second movable portion 60C has the same configuration as the second movable portion 60C except that the second movable portion 60C has a second arm 62C instead of the second arm 62A. The second arm 62C has the same configuration as the second arm 62A except that the second arm 62C has a contact surface 63C instead of the contact surface 63.

The support member 36 is supported by a support portion 86 of the support mechanism 80. The support member 36 is provided so as to be positioned between the first arm 52C and the second arm 62C when viewed from the Z direction. The support member 36 has, for example, a plate shape extending perpendicularly to the Z direction.

In the first movable portion 50C, the contact surface 53C of the first arm 52C with the slide 100 is inclined so as to be farther from the second arm 62C toward the support member 36. In the second movable portion 60C, the contact surface 63C of the second arm 62C with the slide 100 is inclined so as to be farther from the first arm 52C toward the support member 36. As shown in FIG. 23(b), the drive portion 31 moves both the first movable portion 50C and the second movable portion 60C in the Y direction, whereby the first arm 52C and the second arm 62C hold the slide 100 at the pair of long side portions 101. The first arm 52C and the second arm 62C are in contact with two corner portions of the slide 100 in a cross section intersecting the X direction. The support member 36 supports the other main surface 103 of the slide 100 between the pair of long side portions 101.

In the slide holding unit 3C according to the second modification example, similarly to the slide holding unit 3A according to the above-described embodiment, the slide 100 can be reliably held by the first arm 52C and the second arm 62C.

The support member 36 supports the main surface 103 of the slide 100 between the pair of long side portions 101 from below in the Z direction when the first arm 52C and the second arm 62C hold the slide 100 at the pair of long side portions 101. In this case, the slide 100 can be stably held.

The contact surface 53C of the first arm 52C is inclined so as to be farther from the second arm 62C toward the support member 36. The contact surface 63C of the second arm 62C is inclined so as to be farther from the first arm 52C toward the support member 36. In this case, the slide 100 can be held more stably. Specifically, while the slide 100 is pressed against the support member 36 by the first arm 52A and the second arm 62A, the slide 100 is stably held by the first arm 52A, the second arm 62A, and the support member 36.

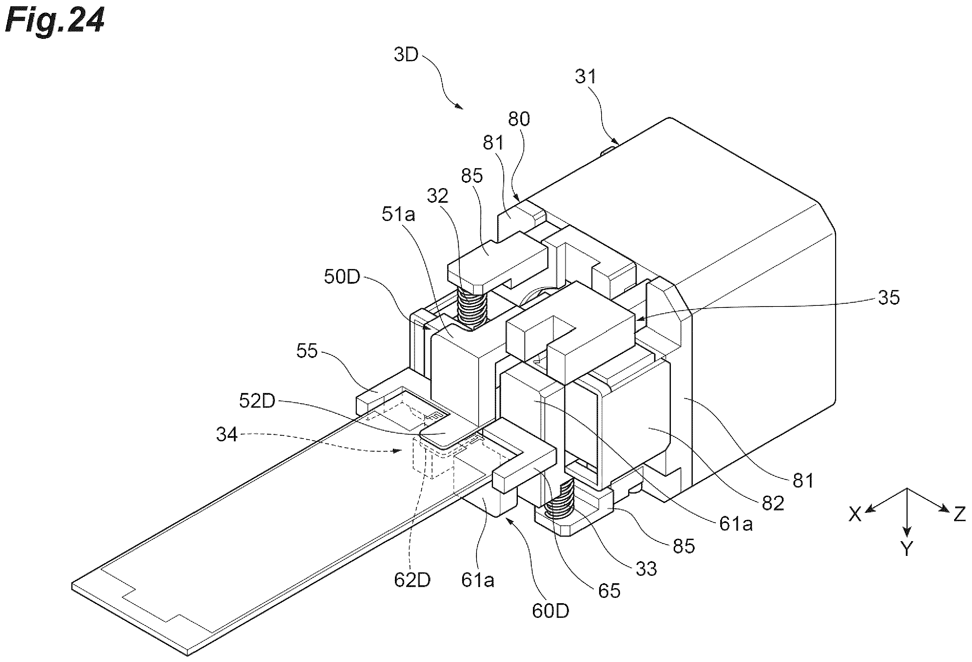

In the slide holding unit 3D according to the third modification example shown in FIG. 24, the first movable portion 50D has the same configuration as the first movable portion 50A except that the first movable portion 50D has a first arm 52D and a rotation-preventing arm 55 instead of the first arm 52A. The second movable portion 60D has a second arm 62D and a rotation-preventing arm 65 instead of the second arm 62A. Therefore, the pair of rotation-preventing arms 55 and 65 are provided on the first movable portion 50D and the second movable portion 60D, respectively. The pair of rotation-preventing arms 55 and 65 may be provided on one of the first movable portion 50D and the second movable portion 60D.

In FIG. 24, in the slide holding unit 3D according to the third modification example, the configuration other than the first arm 52D, the second arm 63D, and the pair of rotation-preventing arms 55 and 65 is the same as the configuration other than the first arm 52A and the second arm 62A in the slide holding unit 3A according to the embodiment, rotated 90° clockwise around the X direction as the central axis. Hereinafter, the vertical direction is defined as the Y direction, the direction perpendicular to the Y direction is defined as the X direction, and the direction perpendicular to the X direction and the Y direction is defined as the Z direction. The X direction, the Y direction, and the Z direction in the slide holding unit 3D according to the third modification example correspond to the X direction, the Y direction, and the Z direction in the slide holding unit 3A according to the embodiment, respectively.

In the slide holding unit 3D, the first arm 52D has, for example, a rectangular plate shape extending perpendicularly to the Y direction. The second arm 62D has, for example, a rectangular plate shape extending perpendicularly to the Y direction. The first arm 52D and the second arm 62D face each other in the Y direction.

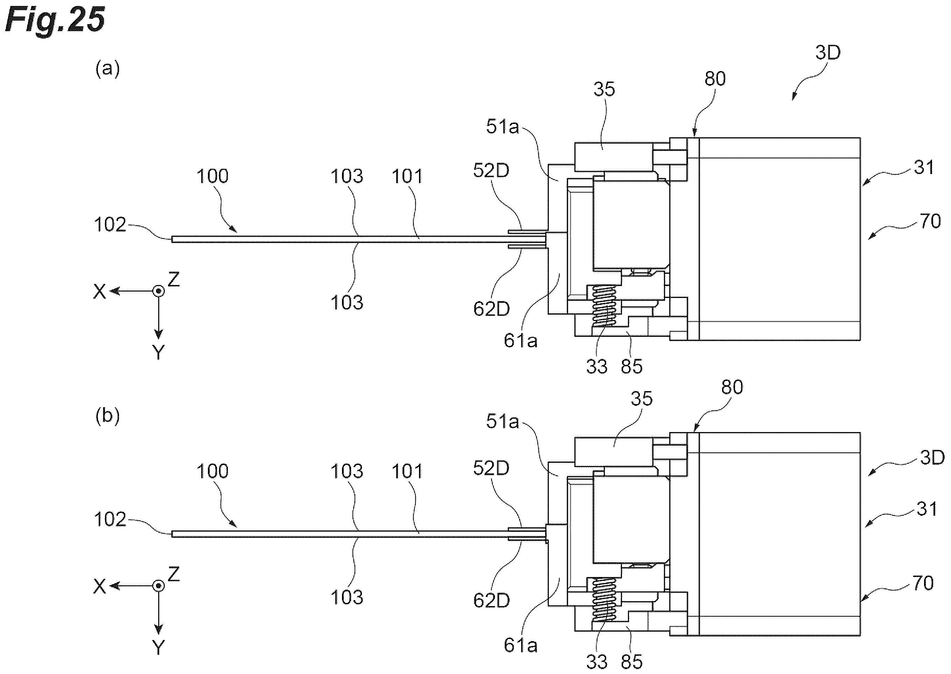

(a) and (b) in FIG. 25 are side views showing the slide holding unit 3D. In FIGS. 25(a) and 25(b), illustration of the rotation-preventing arms 55 and 65 is omitted. The first arm 52D and the second arm 62D hold the slide 100 at the pair of main surfaces 103. The drive portion 31 moves both the first movable portion 50D and the second movable portion 60D in the Y direction, whereby the first arm 52D and the second arm 62D hold the slide 100 at the pair of main surfaces 103.

The pair of rotation-preventing arms 55 and 65 are each configured to extend along the pair of long side portions 101 of the slide 100 extending along the X direction when the slide 100 is held at the pair of main surfaces 103 by the first arm 52D and the second arm 62D. For example, the rotation-preventing arm 55 extends from the proximal end of the first arm 52D along the short side portion 102 toward one side in the Z direction, and extends along the long side portion 101 toward one side in the X direction. The rotation-preventing arm 65 extends, for example, from the proximal end of the second arm 62D along the short side portion 102 toward the other side in the Z direction, and extends along the long side portion 101 toward one side in the X direction. When the slide 100 is held at the pair of main surfaces 103 by the first arm 52D and the second arm 62D, rotation of the slide 100 around an axis parallel to the Y direction is restricted by the pair of rotation-preventing arms 55 and 65.

In the slide holding unit 3D according to the third modification example, since the slide 100 is held at the pair of main surfaces 103 by the first arm 52D and the second arm 62D, the slide 100 can be stably held. Specifically, since the area of the contact portion of the first arm 52D with the slide 100 and the area of the contact portion of the second arm 62D with the slide 100 are sufficiently secured, the slide 100 can be reliably held while suppressing damage to the slide 100.

In the slide holding unit 3D according to the third modification example, when the slide 100 is held at the pair of main surfaces 103 by the first arm 52D and the second arm 62D, rotation of the slide 100 around an axis parallel to the Y direction is restricted by the pair of rotation-preventing arms 55 and 65. In this case, rotation of the slide 100 around an axis parallel to the Y direction can be restricted by the pair of rotation-preventing arms 55 and 65. Accordingly, similarly to the slide holding unit 3A according to the above-described embodiment, the slide 100 can be reliably held by the first arm 52D and the second arm 62D.

The present disclosure is not limited to the above-described embodiment and modification examples. For example, the material and shape of each configuration are not limited to the material and shape described above, and various materials and shapes can be adopted. In the above-described embodiment and each modification example, the drive portion 31 moved the first movable portion 50A and the second movable portion 60A in the Y direction such that the first arm 52A and the second arm 62A move symmetrically with respect to the symmetry axis A parallel to the X direction; however, the first arm 52A and the second arm 62A need not move symmetrically with respect to the symmetry axis A parallel to the X direction. For example, the drive portion 31 may move the first movable portion 50A and the second movable portion 60A separately.

The first movable portion 50A and the second movable portion 60A move in the Y direction in accordance with the rotation angle of the cam portion 72; however, the present disclosure is not limited to this. For example, the drive portion 31 may have another drive mechanism other than those described above instead of the motor 71 and the cam portion 72, and the first movable portion 50A and the second movable portion 60A may move in the Y direction in accordance with the operation of the drive mechanism.

The cam portion 72 is a so-called plate cam, and the first cam follower 51b and the second cam follower 61b slide on the outer peripheral surface 72a of the cam portion 72; however, the present disclosure is not limited to this. For example, the cam portion 72 may be a so-called face cam, and the first cam follower 51b and the second cam follower 61b may slide inside a groove formed on the surface of the cam portion 72. In addition, as a drive mechanism for the first movable portion 50A and the second movable portion 60A in the drive portion 31, a drive mechanism based on meshing between gears may be used instead of a drive mechanism based on sliding between a cam and a cam follower.

The first biasing member 32 and the second biasing member 33 are coil springs; however, it is sufficient that the first biasing member 32 biases the first movable portion 50A such that the first arm 52A approaches the second arm 62A, and the second biasing member 33 biases the second movable portion 60A such that the second arm 62A approaches the first arm 52A. For example, the first biasing member 32 and the second biasing member 33 may be elastic bodies other than the above. Even in this case, for example, even when power is suddenly no longer supplied to the slide holding unit 3A, it is possible to prevent the holding of the slide 100 by the first arm 52A and the second arm 62A from being released and the slide 100 from falling.

The slide holding unit 3A need not include the first biasing member 32 and the second biasing member 33. In this case, the cam portion 72 may have a cam groove having a shape in which a dimension in the major axis direction is larger than a dimension in the minor axis direction. The first cam follower 51b and the second cam follower 61b may slide in the cam groove. By causing the first cam follower 51b and the second cam follower 61b to face each other in the minor axis direction of the cam groove, the distance L2 between the first arm 52A and the second arm 62A in the Y direction may be set to the second distance L22. The second distance L22 may be equal to the width of the slide 100. Therefore, the second distance L22 may be equal to or less than the width of the slide 100.

The first biasing member 32 and the second biasing member 33 are disposed at positions different from each other when viewed from the Y direction; however, the first biasing member 32 and the second biasing member 33 may be disposed at positions overlapping each other when viewed from the Y direction.

The slide holding unit need not include the first sensor 34 and the second sensor 35. In addition, as long as the slide holding unit can detect the state of the distance L2 between the first arm 52A and the second arm 62A in the Y direction, the slide holding unit may have sensors other than the first sensor 34 and the second sensor 35.

As long as the slide 100 can be held by the first arm 52A and the second arm 62A, the groove portions 53a and 63a need not be formed in the contact surface 53 and the contact surface 63.

The first arm 52A need not have the protruding portion 54 that is formed on the proximal end side relative to the contact surface 53 with the slide 100 and that protrudes toward the second arm 62A side relative to the contact surface 53. It is sufficient that the slide 100 can be held by the first arm 52A and the second arm 62A.

Each of the length L1 of the contact surface 53 (contact portion) of the first arm 52A with the slide 100 along the X direction and the length L1 of the contact surface 63 (contact portion) of the second arm 62A with the slide 100 along the X direction may be greater than 16.5 mm.

The first arm 52A and the second arm 62A may hold the slide 100 at the pair of short side portions 102 instead of the pair of long side portions 101.

### Reference Signs List

1: image acquisition apparatus, 3A, 3B, 3C, 3D: slide holding unit, 31: drive portion, 32: first biasing member, 33: second biasing member, 34: first sensor, 35: second sensor, 36: support member, 41: stage, 41b: wall portion, 50A, 50B, 50C, 50D: first movable portion, 52A, 52B, 52C, 52D: first arm, 53, 53C, 63, 63C: contact surface, 53a, 63a: groove portion, 54, 64: protruding portion, 60A, 60B, 60C, 60D: second movable portion, 62A, 62B, 62C, 62D: second arm, 71: motor, 72: cam portion, 100: slide, 101: pair of long side portions (pair of side portions), 103: main surface, A: symmetry axis, L1: length, L2: distance, L21: first distance, L22: second distance, S: specimen.

## Claims

1. A slide holding unit for holding a rectangular plate-shaped slide including a pair of side portions, the slide holding unit comprising:
a first movable portion including a first arm extending along a first direction;
a second movable portion including a second arm extending along the first direction and facing the first arm in a second direction perpendicular to the first direction; and
a drive portion that moves the first movable portion and the second movable portion,
wherein the drive portion moves both the first movable portion and the second movable portion in the second direction, whereby the first arm and the second arm hold the slide at the pair of side portions.

2. The slide holding unit according to claim 1,
wherein the drive portion moves the first movable portion and the second movable portion in the second direction such that the first arm and the second arm move symmetrically with respect to a symmetry axis parallel to the first direction.

3. The slide holding unit according to claim 1 or 2,
wherein the drive portion includes a motor and a cam portion rotated by the motor, and in accordance with a rotation angle of the cam portion, the first movable portion and the second movable portion move in the second direction.

4. The slide holding unit according to claim 3,
wherein the cam portion has a shape in which a dimension in a major axis direction is larger than a dimension in a minor axis direction,
by causing the first movable portion and the second movable portion to face each other in the major axis direction, a distance between the first arm and the second arm in the second direction is set to a first distance, and by causing the first movable portion and the second movable portion to face each other in the minor axis direction, the distance between the first arm and the second arm is set to a second distance, and
the first distance is larger than a width of the slide between the pair of side portions, and the second distance is equal to or less than the width of the slide.

5. The slide holding unit according to any one of claims 1 to 4, further comprising:
a first biasing member that biases the first movable portion such that the first arm approaches the second arm; and a second biasing member that biases the second movable portion such that the second arm approaches the first arm.

6. The slide holding unit according to claim 5,
wherein the first biasing member and the second biasing member are disposed at positions different from each other when viewed from the second direction.

7. The slide holding unit according to any one of claims 1 to 6, further comprising:
a first sensor that is turned on and off in accordance with a position of the first movable portion in the second direction; and a second sensor that is turned on and off in accordance with a position of the second movable portion in the second direction,
wherein the first sensor and the second sensor are disposed such that a first state, a second state, and a third state are distinguishable by a combination of on and off states of the first sensor and the second sensor, a distance between the first arm and the second arm in the second direction in the first state is larger than a width of the slide between the pair of side portions, the distance between the first arm and the second arm in the second state is equal to the width of the slide, and the distance between the first arm and the second arm in the third state is smaller than the width of the slide.

8. The slide holding unit according to any one of claims 1 to 7,
wherein a groove portion extending along the first direction is formed in at least one of a contact surface of the first arm with the slide and a contact surface of the second arm with the slide.

9. The slide holding unit according to claim 8,
wherein the groove portion is formed in both the contact surface of the first arm with the slide and the contact surface of the second arm with the slide.

10. The slide holding unit according to any one of claims 1 to 9,
wherein the first arm includes a protruding portion that is formed on a proximal end side relative to a contact surface with the slide and that protrudes toward the second arm side relative to the contact surface.

11. The slide holding unit according to any one of claims 1 to 10,
wherein each of a length of a contact portion of the first arm with the slide along the first direction and a length of a contact portion of the second arm with the slide along the first direction is 16.5 mm or less.

12. The slide holding unit according to any one of claims 1 to 11, further comprising:
a support member that is provided so as to be positioned between the first arm and the second arm when viewed from a direction perpendicular to the first direction and the second direction, and that supports a main surface of the slide between the pair of side portions when the first arm and the second arm hold the slide at the pair of side portions.

13. The slide holding unit according to claim 12,
wherein a contact surface of the first arm with the slide is inclined so as to be farther from the second arm toward the support member, and
a contact surface of the second arm with the slide is inclined so as to be farther from the first arm toward the support member.

14. An image acquisition apparatus that acquires an image of a specimen held on a slide, the image acquisition apparatus comprising:
the slide holding unit according to any one of claims 1 to 13; and
a stage on which the slide transported by the slide holding unit is placed,
wherein the stage includes a pair of wall portions disposed so as to extend along the pair of side portions when the slide is placed on the stage, and
when the slide is disposed between the pair of wall portions, movement of the slide in the second direction is restricted by the pair of wall portions.
